# EUROPEAN PATENT SPECIFICATION

(11) **EP 3 757 829 B1**
(45) Date of publication and mention of the grant of the patent: **23.04.2025**
(21) Application number: 20163791.5
(22) Date of filing: 18.03.2020
(51) Int. Cl.: G06F 21/12, G06F 21/55, G06F 9/38, G06F 12/0862, G06F 12/14, G06F 9/30

(54) **PROCESSOR INSTRUCTION SUPPORT FOR MITIGATING CONTROLLED-CHANNEL AND CACHE-BASED SIDE-CHANNEL ATTACKS**
UNTERSTÜTZUNG VON PROZESSORBEFEHLEN ZUR ABSCHWÄCHUNG VON ANGRIFFEN AUF STEUERKANÄLE UND CACHE-BASIERTE SEITENKANÄLE
SUPPORT D'INSTRUCTIONS DE PROCESSEUR POUR ATTÉNUER DES ATTAQUES PAR CANAUX AUXILIAIRES À CANAL CONTRÔLÉ ET À BASE DE CACHE

(30) Priority: 29.06.2019 US 201916458015
(43) Date of publication of application: 30.12.2020
(73) Proprietor: INTEL Corporation, Santa Clara, CA 95054 (US)
(72) Inventor: Constable, Scott, Portland, Oregon 97229 (US); Liu, Fangfei, Hillsboro, Oregon 97124 (US); Xing, Bin, Hillsboro, Oregon 97124 (US); Steiner, Michael, Portland, Oregon 97201 (US); Vij, Mona, Hillsboro, Oregon 97124-5961 (US); Rozas, Carlos, Portland, Oregon 97229 (US); McKeen, Francis X., Portland, Oregon 97229 (US); Ozsoy, Meltem, Portland, Oregon 97209 (US); Fernandez, Matthew, Portland, Oregon 97227 (US); Zmudzinski, Krystof, Forest Grove, Oregon 97116 (US); Shanahan, Mark, Raleigh, North Carolina 27606 (US)
(74) Representative: Samson & Partner Patentanwälte mbB

(56) References cited:
- US-A- 4 942 524
- US-A1- 2014 281 437
- RAOUL STRACKX ET AL: "The Heisenberg Defense: Proactively Defending SGX Enclaves against Page-Table-Based Side-Channel Attacks", ARXIV.ORG, CORNELL UNIVERSITY LIBRARY, 201 OLIN LIBRARY CORNELL UNIVERSITY ITHACA, NY 14853, 22 December 2017 (2017-12-22), XP080848034

## Description

### FIELD OF THE INVENTION

The disclosure relates generally to electronics, and, more specifically, an embodiment of the disclosure relates to circuitry to implement an instruction that causes a processor to operate in a side-channel protected mode.

### BACKGROUND

Certain classes of software-based side-channel attacks involve one software program (an attacker) obtaining information about another program (a victim) by exploiting a common underlying resource (e.g., a central processing unit (CPU)). Exemplary side-channel attacks include page fault-based attacks and cache-based attacks. Page fault-based attacks are side-channel attacks that target programs executed inside a trusted execution environment, in which the operating system (OS) is not in the trusted computing base. An attacker such as a malicious OS can perform a side-channel attack by observing the sequences of page faults during a program's execution by actively manipulating the page table or by passively observing changes in control bits of a page table entry. In this manner, the attacker can obtain the memory access pattern of the program during execution. If the memory access pattern depends on the secret information being processed, the attacker can infer the secret information indirectly. Cache-based side-channel attacks are more general attacks based on caches that are shared by programs executed by a CPU. The timing differences between a victim's cache misses and cache hits enables an attacker such as a malicious program to infer cache access patterns (e.g., which cache location is accessed and when it is accessed) of the victim. Based on those patterns, the attacker can infer secret information being processed by the victim program.

US 2014/0281437 A1 describes system call and system return instructions to transfer control between a requester and an operating system kernel. US 4,942,524 describes a stack mechanism for saving information containing the content of the software trap handling pointer.

### THE INVENTION

The invention is defined by the independent claims.

### BRIEF DESCRIPTION OF THE DRAWINGS

The present invention is illustrated by way of example and not limitation in the accompanying figures, in which like references indicate similar elements.
**Figure 1** illustrates a high-level view of side-channel attack mitigation according to some embodiments.
**Figures 2A-2B** illustrate an embodiment of hardware to process instructions to support side-channel attack mitigation.
**Figures 3A-3D** illustrate an exemplary data cache unit, an exemplary instruction cache unit, an exemplary instruction translation lookaside buffer unit, and an exemplary data translation lookaside buffer during execution of a series of exemplary instructions.
**Figures 4A-4B** illustrate an exemplary data cache unit, an exemplary instruction cache unit, an exemplary instruction translation lookaside buffer unit, and an exemplary data translation lookaside buffer before and after an eviction event.
**Figure 5** illustrates embodiments of an ENBEGIN instruction, an ENEND instruction, a MOVCIP instruction, a PRELOAD CACHE instruction, a PRELOAD TLB instruction, and an ENCALL instruction.
**Figure 6** illustrates an embodiment of hardware to process the exemplary instructions illustrated in Figure 5.
**Figure 7** illustrates an embodiment of a method performed by a processor to process an ENBEGIN instruction.
**Figure 8** illustrates an embodiment of a method performed by a processor to process an ENEND instruction.
**Figure 9** illustrates an embodiment of a method performed by a processor to process a MOVCIP instruction.
**Figure 10** illustrates an embodiment of a method performed by a processor to process a PRELOAD CACHE instruction.
**Figure 11** illustrates an embodiment of method performed by a processor in response to an event that occurs while in an event-notify mode.
**Figure 12** illustrates an embodiment of a method performed by a processor to process a PRELOAD PAGE instruction.
**Figure 13** illustrates an embodiment of a method performed by a processor to process an ENCALL instruction.
**Figure 14** illustrates a computer system including a branch predictor and a branch address calculator (BAC) in a pipelined processor core according to embodiments of the disclosure.
**Figure 15** illustrates an example code flow for an event-notify mode according to embodiments of the disclosure.
**Figure 16** illustrates a stack used in an event-notify mode according to embodiments of the disclosure.
**Figure 17A** is a block diagram illustrating a generic vector friendly instruction format and class A instruction templates thereof according to embodiments of the disclosure.
**Figure 17B** is a block diagram illustrating the generic vector friendly instruction format and class B instruction templates thereof according to embodiments of the disclosure.
**Figure 18A** is a block diagram illustrating fields for the generic vector friendly instruction formats in Figures 17A and 17B according to embodiments of the disclosure.
**Figure 18B** is a block diagram illustrating the fields of the specific vector friendly instruction format in Figure 18A that make up a full opcode field according to one embodiment of the disclosure.
**Figure 18C** is a block diagram illustrating the fields of the specific vector friendly instruction format in Figure 18A that make up a register index field according to one embodiment of the disclosure.
**Figure 18D** is a block diagram illustrating the fields of the specific vector friendly instruction format in Figure 18A that make up the augmentation operation field 1750 according to one embodiment of the disclosure.
**Figure 19** is a block diagram of a register architecture according to one embodiment of the disclosure.
**Figure 20A** is a block diagram of a single processor core, along with its connection to the on-die interconnect network and with its local subset of the Level 2 (L2) cache, according to embodiments of the disclosure.
**Figure 20B** is an expanded view of part of the processor core in Figure 20A according to embodiments of the disclosure.
**Figure 21** is a block diagram of a processor that may have more than one core, may have an integrated memory controller, and may have integrated graphics according to embodiments of the disclosure.
**Figure 22** is a block diagram of a system in accordance with one embodiment of the present disclosure.
**Figure 23** is a block diagram of a more specific exemplary system in accordance with an embodiment of the present disclosure.
**Figure 24****,** shown is a block diagram of a second more specific exemplary system in accordance with an embodiment of the present disclosure.
**Figure 25****,** shown is a block diagram of a system on a chip (SoC) in accordance with an embodiment of the present disclosure.
**Figure 26** is a block diagram contrasting the use of a software instruction converter to convert binary instructions in a source instruction set to binary instructions in a target instruction set according to embodiments of the disclosure.

### DETAILED DESCRIPTION

In the following description, numerous specific details are set forth. However, it is understood that embodiments of the invention may be practiced without these specific details. In other instances, well-known circuits, structures and techniques have not been shown in detail in order not to obscure the understanding of this description.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Detailed herein are embodiments of a set of instructions and hardware support to detect and protection against side-channel attacks. In particular, the disclosed embodiments relate to a set of instructions that software programs can leverage to eliminate the ability of an attacker to obtain secret information. In particular, the instructions place a processor in a side-channel protected mode (referred to as an "event-notify mode"). In the event-notify mode, certain events that might be indicative of a side-channel attack cause user-level program execution to redirect through a user-level event handler. The user-level event handler allows the user-level program to prevent an attacker from observing cache or memory access patterns by pinning critical or sensitive information in a cache (to prevent cache-based attacks) or a translation lookaside buffer (TLB) (to prevent page fault-based attacks). With the instructions and hardware support, user-level programs can incorporate a lightweight protection mechanism against side-channel attacks.

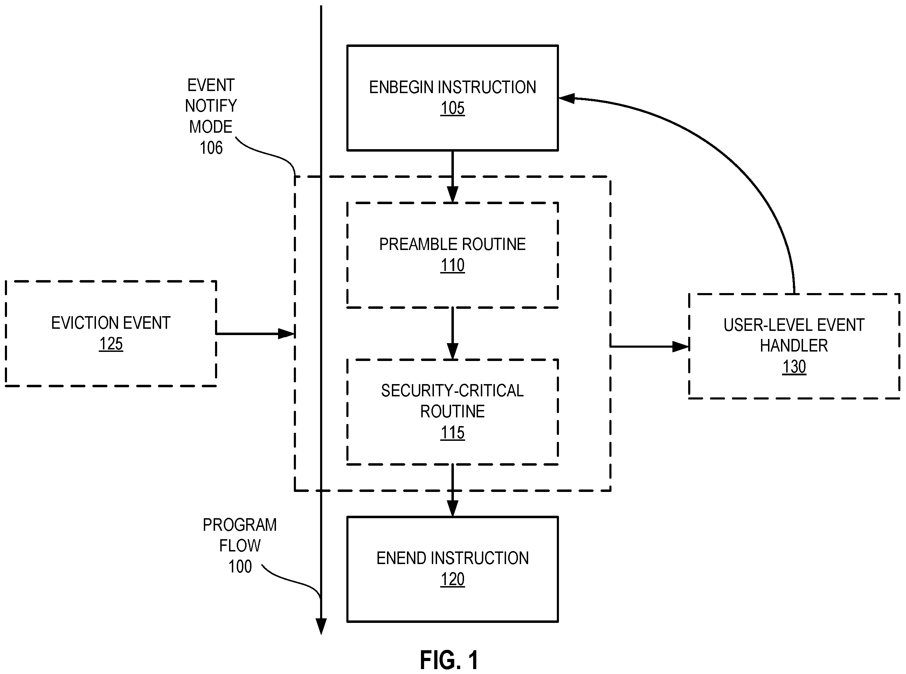

**Figure 1** illustrates a high-level view of side-channel attack mitigation according to some embodiments. As illustrated, a program flow 100 of a user-level application includes an ENBEGIN instruction 105, a preamble routine 110, a security-critical routine 115, and an ENEND instruction 120. In this usage, the dashing of the preamble routine 110 and the security-critical routine 115 indicate that they are specific to the user-level application and may vary from one application to another. The preamble routine 110 and the security-critical routine 115 include instructions related to the user-level application being protected. Protection entails the processor executing the application entering an event-notify mode 106. A user-level application can instruct the processor to enter the event-notify mode 106 to proactively protect secret information from side-channel attacks. In particular, the user-level application wraps the preamble routine 110 and the security-critical routine 115 with the ENBEGIN instruction 105 and the ENEND instruction 120. Note that although Figure 1 illustrates the ENBEGIN instruction 105 as separate from the preamble routine 110, in some embodiments, the ENBEGIN instruction is included early in the preamble routine 110.

Before the processor executes the security-critical code 115, the preamble code 110 causes the processor to load all security-critical code and/or data into cache(s) and/or TLB(s). Absent an eviction event 125 during the event-notify mode 106, the processor executes the preamble routine 110, the security critical routine 115, and then exits the event-notify mode 106 upon executing the ENEND instruction.

If an eviction event 125 occurs while the processor is processing instructions in event-notify mode 106, the processor raises an exception to redirect the user-level application flow to a user-level event handler 130. Again, the dashing of the user-level event handler 130 indicates that it is specific to the user-level application and may vary from one application to another. When the redirection occurs, the processor exits the event-notify mode. Once in the user-level event handler, the software program can implement a variety of side-channel mitigation measures. One example of such a mitigation measure is for the user-level event handler to issue an ENBEGIN instruction 105 and then calling the preamble routine 110 (as illustrated) or calling the preamble routine 110 (if the preamble routine includes the ENBEGIN instruction 105). The preamble routine 110 causes the processor to reload the security-critical code and/or data into cache(s) and/or TLB(s). In this manner, the user-level event handler 130 and preamble routine 110 effectively "pin" the code and/or data in the cache(s)/TLB(s). Because a pre-condition of a successful page fault- or cache-based side-channel attack is causing evictions or monitoring evictions, an attacker cannot observe or manipulate the security-critical code and/or data. Furthermore, since the security critical code and/or data is pre-loaded into the cache(s)/TLB(s), an attacker cannot obtain information based on a victim's execution or cache footprint before and after execution.

### Exemplary Core Architecture

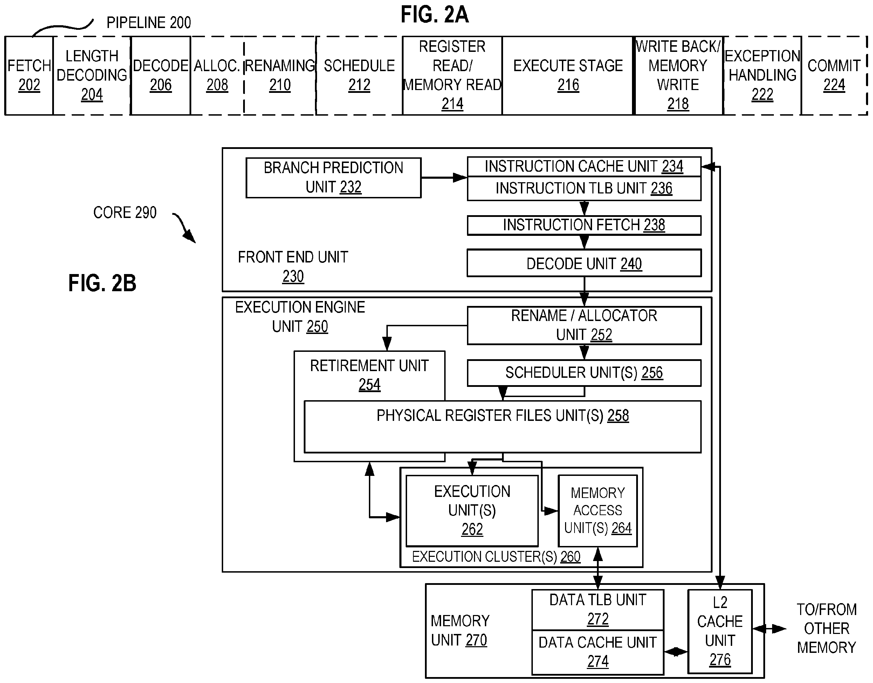

Figures **2A-2B** illustrate an embodiment of hardware to process instructions to support side-channel attack mitigation. In particular, Figure 2A is a block diagram illustrating both an exemplary in-order pipeline and an exemplary register renaming, out-of-order issue/execution pipeline according to embodiments of the invention. Figure 2B is a block diagram illustrating both an exemplary embodiment of an in-order architecture core and an exemplary register renaming, out-of-order issue/execution architecture core to be included in a processor according to embodiments of the invention. The solid lined boxes in Figures 2A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In Figure 2A, a processor pipeline 200 includes a fetch stage 202, a length decode stage 204, a decode stage 206, an allocation stage 208, a renaming stage 210, a scheduling (also known as a dispatch or issue) stage 212, a register read/memory read stage 214, an execute stage 216, a write back/memory write stage 218, an exception handling stage 222, and a commit stage 224.

Figure 2B shows processor core 290 including a front end unit 230 coupled to an execution engine unit 250, and both are coupled to a memory unit 270. The core 290 may be a reduced instruction set computing (RISC) core, a complex instruction set computing (CISC) core, a very long instruction word (VLIW) core, or a hybrid or alternative core type. As yet another option, the core 290 may be a special-purpose core, such as, for example, a network or communication core, compression engine, coprocessor core, general-purpose computing graphics processing unit (GPGPU) core, graphics core, or the like.

The front end unit 230 includes a branch prediction unit 232 coupled to an instruction cache unit 234, which is coupled to an instruction TLB 236, which is coupled to an instruction fetch unit 238, which is coupled to a decode unit 240. The decode unit 240 (or decoder) may decode instructions, and generate as an output one or more micro-operations, micro-code entry points, microinstructions, other instructions, or other control signals, which are decoded from, or which otherwise reflect, or are derived from, the original instructions. The decode unit 240 may be implemented using various different mechanisms. Examples of suitable mechanisms include, but are not limited to, look-up tables, hardware implementations, programmable logic arrays (PLAs), microcode read only memories (ROMs), etc. In one embodiment, the core 290 includes a microcode ROM or other medium that stores microcode for certain macroinstructions (e.g., in decode unit 240 or otherwise within the front end unit 230). The decode unit 240 is coupled to a rename/allocator unit 252 in the execution engine unit 250.

The execution engine unit 250 includes the rename/allocator unit 252 coupled to a retirement unit 254 and a set of one or more scheduler unit(s) 256. The scheduler unit(s) 256 represents any number of different schedulers, including reservations stations, central instruction window, etc. The scheduler unit(s) 256 is coupled to the physical register file(s) unit(s) 258. Each of the physical register file(s) units 258 represents one or more physical register files, different ones of which store one or more different data types, such as scalar integer, scalar floating point, packed integer, packed floating point, vector integer, vector floating point, status (e.g., an instruction pointer that is the address of the next instruction to be executed), etc. In one embodiment, the physical register file(s) unit 258 comprises a vector registers unit, a write mask registers unit, and a scalar registers unit. These register units may provide architectural vector registers, vector mask registers, and general-purpose registers. The physical register file(s) unit(s) 258 is overlapped by the retirement unit 254 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 254 and the physical register file(s) unit(s) 258 are coupled to the execution cluster(s) 260. The execution cluster(s) 260 includes a set of one or more execution units 262 and a set of one or more memory access units 264. The execution units 262 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 256, physical register file(s) unit(s) 258, and execution cluster(s) 260 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 264). It should also be understood that where separate pipelines are used, one or more of these pipelines may be out-of-order issue/execution and the rest in-order.

The set of memory access units 264 is coupled to the memory unit 270, which includes a data TLB unit 272 coupled to a data cache unit 274 coupled to a level 2 (L2) cache unit 276. In one exemplary embodiment, the memory access units 264 may include a load unit, a store address unit, and a store data unit, each of which is coupled to the data TLB unit 272 in the memory unit 270. The instruction cache unit 234 is further coupled to a level 2 (L2) cache unit 276 in the memory unit 270. The L2 cache unit 276 is coupled to one or more other levels of cache and eventually to a main memory.

By way of example, the exemplary register renaming, out-of-order issue/execution core architecture may implement the pipeline 200 as follows: 1) the instruction fetch 238 performs the fetch and length decoding stages 202 and 204; 2) the decode unit 240 performs the decode stage 206; 3) the rename/allocator unit 252 performs the allocation stage 208 and renaming stage 210; 4) the scheduler unit(s) 256 performs the schedule stage 212; 5) the physical register file(s) unit(s) 258 and the memory unit 270 perform the register read/memory read stage 214; the execution cluster 260 perform the execute stage 216; 6) the memory unit 270 and the physical register file(s) unit(s) 258 perform the write back/memory write stage 218; 7) various units may be involved in the exception handling stage 222; and 8) the retirement unit 254 and the physical register file(s) unit(s) 258 perform the commit stage 224.

The core 290 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 290 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel^{®} Hyperthreading technology).

While register renaming is described in the context of out-of-order execution, it should be understood that register renaming may be used in an in-order architecture. While the illustrated embodiment of the processor also includes separate instruction and data cache units 234/274 and a shared L2 cache unit 276, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

The core 290 raises the user-level event handler whenever certain events that might be associated with an attack might occur ("security-critical events") during the event-notify mode. Exemplary security-critical events include eviction of entries in the data TLB unit 272, the data cache unit 274, the instruction cache unit 234, or the instruction TLB 236. In addition, the core 290 raises the user-level event handler in response to other security-critical events such as an external interrupt or exception.

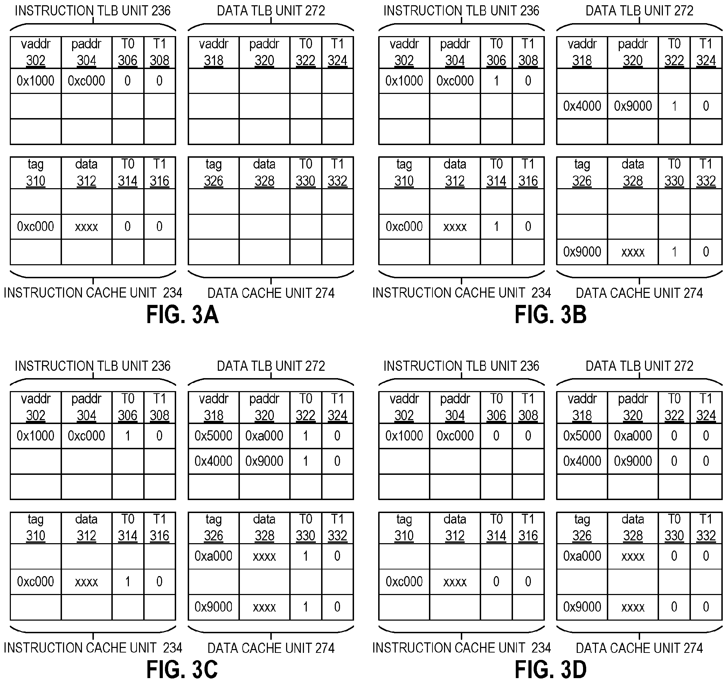

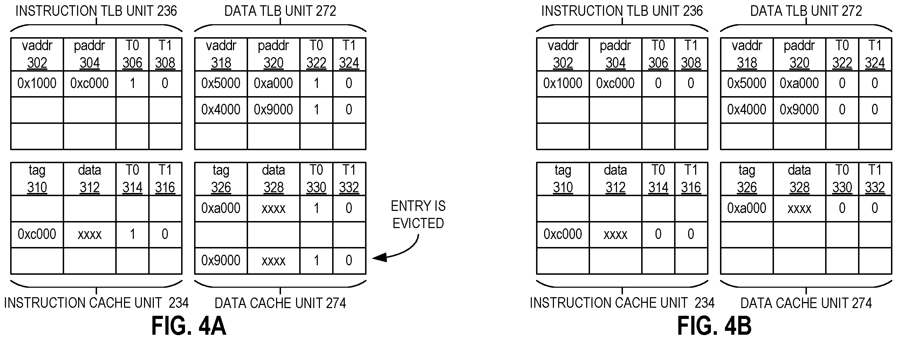

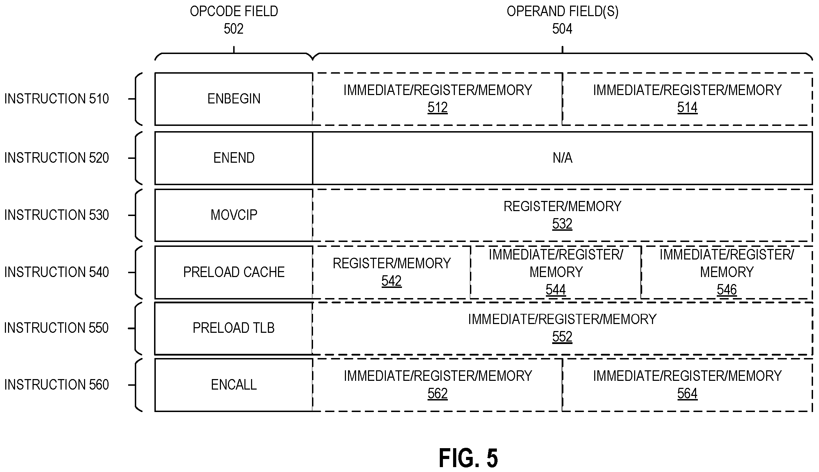

Several features of the core 290 support event-notify mode, including one or more registers, entry-level tracking of cache or TLB entries impacted by security-critical events (described with reference to Figures 3A-3D and 4A-4B), and the addition of instructions including ENBEGIN and ENEND (described with reference to Figure 5). With regard to register-support, the core 290 includes one or more registers to support the flow and status of the event-notify mode. In an exemplary embodiment, each thread supported by the core 290 includes an event-notify status flag in a register, a user-level event handler (e.g., trampoline) pointer (ERIP) register, and a current instruction pointer (RIP) register. The event-notify status flag indicates whether the core 290 is operating in event-notify mode for the thread. In one embodiment, the RIP stores the current (e.g., next) instruction pointer of the processor. In one embodiment, a CIP register (e.g., separate from the RIP register) stores a copy of the instruction pointer (IP) of the program flow when a security-critical event occurs. In one embodiment, the ERIP register stores the location of (e.g., a trampoline to) the user-level event handler that the core 290 redirects program flow to after occurrence of a security-critical event, for example, and then stores a copy of the instruction pointer (IP) of the program flow where a security-critical event occurs (e.g., the IP for the instruction following the last instruction retired before the event).

In certain embodiments, the event-notify status flag and the ERIP register need not be saved during a context-switch. In embodiment, when a security-critical event occurs, the core 290 uses the information in the ERIP register prior to any context-switch, and the event-notify status flag can be cleared without saving as the core 290 exits the event-notify mode upon occurrence of a security-critical event.

Table 1 below illustrates an example instruction sequence in reference to Figures 3A-3D (where I1 is instruction one, I2 is instruction 2, etc.) and ENPF is to only set t-bits in cache and ENPFPG is to only set t-bits in TLB (e.g., instead of a single instruction setting t-bits in cache and TLB). Figure 3A illustrates these data structures after execution of I1, Figure 3B illustrates after execution of I2 and I3, 3C illustrates after execution of I4 and I5, and 3D illustrates after execution of I6.

**Table 1: Example instruction sequence**

| **Instruction** | **IP (e.g., PC)** | **Accessed virtual address** |
|---|---|---|
| I1: ENBEGIN | 0x1000 | |
| I2: ENPF (%rsi) | 0x1004 | 0x4000 |
| I3: ENPFPG (%rsi) | 0x1008 | 0x4000 |
| I4: ENPF 0x1000(%rs1) | 0x100c | 0x5000 |
| I5: ENPFPG 0x1000(%rsi) | 0x1010 | 0x5000 |
| I6: ENEND | 0x1014 | |

Figures 3A-3D and 4A-4B illustrate an exemplary instruction TLB unit 236, an exemplary data TLB unit 272, an exemplary instruction cache unit 234, and an exemplary data cache unit 274. At a high-level, an entry in a cache or TLB includes a per-thread tracking bit that indicates whether the entry is tracked in the event-notify mode. Rather than redirect program flow to the user-level event handler 120 on any cache eviction, the tracking or "T" bits allow the core 290 to redirect program flow only when an eviction of security-critical code or data occurs. The T-bits can be set or cleared independently for each hardware thread even if multiple threads share code or data and access the shared code/data in the event-notify mode. In an exemplary embodiment, an access of an entry in a TLB or cache while operating in the event-notify mode brings the data into tracked state. In other words, if the program flow (e.g., preamble routine 110 and security critical code 115) cause a memory access that hits within the cache or TLB, the core 290 (e.g., logic controlling the cache or TLB) sets the T-bit of the associated entry for the thread associated with the access. Further, if the program flow causes a memory access that misses the cache or TLB and results in retrieval of data from another memory, the core 290 sets the T-bit of the cache/TLB entry in which the retrieved data is stored. In some embodiments, as described below, a mask value may enable or disable eviction tracking for a particular cache and/or TLB, thereby preventing the T-bit from being set in the masked cache(s)/TLB(s).

**Figures 3A-3D** illustrate the state of the instruction TLB unit 236, the data TLB unit 272, the instruction cache unit 234, and the data cache unit 274 during execution of the exemplary set of instructions illustrated in Table 1. Figures 4A-4B illustrate the state of the caches and TLBs before and after an eviction. As illustrated in each of Figures 3A-3D and 4A-4B, and assuming a two-thread core 290: each entry in the instruction TLB unit 236 includes a virtual address 302, a physical address 304, a first thread T-bit ("T0") 306, and a second thread T-bit ("T1") 308; each entry in the data TLB unit 272 includes a virtual address 318, a physical address 320, a first thread T-bit ("T0") 322, and a second thread T-bit ("T1") 324; each entry in the instruction cache unit 234 includes a tag 310, data 312, a first thread T-bit ("T0") 314, and a second thread T-bit ("T1") 316; and each entry in the data cache unit 274 includes a tag 326, data 328, a first thread T-bit ("T0") 330, and a second thread T-bit ("T1") 330.

Figure 3A illustrates the state of the TLBs 236, 272 and the caches 234, 275 after the processor executes the first instruction. Initially, the core 290 is processing the program and the program counter proceeds to a memory location that includes the ENBEGIN instruction. The core 290 fetches the instruction from memory resulting in updates to the instruction TLB unit 236 and the instruction cache unit 234. In this example, the instruction TLB unit 236 is updated with an entry having a virtual address 302 of 0x1000 and a physical address 304 of 0xc000 and the instruction cache unit 234 is updated with an entry having a tag 310 of 0xc000 and a data value that includes instructions beginning at virtual address 0x1000. Further, the T-bits 306, 308, 314, and 316 of the new entries for the first and second thread remain '0' as the core 290 has yet to enter event-notify mode. Because the instruction does not involve data, the data TLB unit 272 and the data cache unit 274 remain unchanged.

Figure 3B illustrates the state of the TLBs 236, 272 and the caches 234, 275 after the processor executes the second (ENPF) instruction and third (ENPFPG) instruction. The second instruction causes the data cache unit 274 to be updated with an entry having a tag 326 of 0x9000. Further, the T-bit 330 corresponding to the new entry is set. The third instruction causes the data TLB unit 272 to be updated with an entry having a virtual address 318 of 0x4000 and a physical address 320 of 0x9000. Further, the T-bit 322 corresponding to the new entry is set.

Figure 3C illustrates the state of the TLBs 236, 272 and the caches 234, 275 after the processor executes the fourth (ENPF) instruction and fifth (ENPHPG) instruction. The third instruction causes the data cache unit 274 to be updated with an entry having a tag 326 of 0xa000. Further, the T-bit 330 corresponding to the new entry is set. The fifth instruction causes the data TLB unit 272 to be updated with an entry having a virtual address 318 of 0x5000 and a physical address 320 of 0xa000. Further, the T-bit 322 corresponding to the new entry is set.

Figure 3D illustrates the state of the TLBs 236, 272 and the caches 234, 275 after the processor executes the sixth (ENEND) instruction. When the core 290 processes the ENEND instruction, it clears (or causes logic associated with the cache(s)/TLB(s) to clear) all of the set T-bits along with other operations (e.g., clearing the event-notify status flag).

Figures **4A-4B** illustrate the state of the instruction TLB unit 236, the data TLB unit 272, the instruction cache unit 234, and the data cache unit 274 before and after a security-critical event, such as a cache eviction. Again assuming a two-thread core 290: each entry in the instruction TLB unit 236 includes a virtual address 302, a physical address 304, a first thread T-bit ("T0") 306, and a second thread T-bit ("T1") 308; each entry in the data TLB unit 272 includes a virtual address 318, a physical address 320, a first thread T-bit ("T0") 322, and a second thread T-bit ("T1") 324; each entry in the instruction cache unit 234 includes a tag 310, data 312, a first thread T-bit ("T0") 314, and a second thread T-bit ("T1") 316; and each entry in the data cache unit 274 includes a tag 326, data 328, a first thread T-bit ("T0") 330, and a second thread T-bit ("T1") 330.

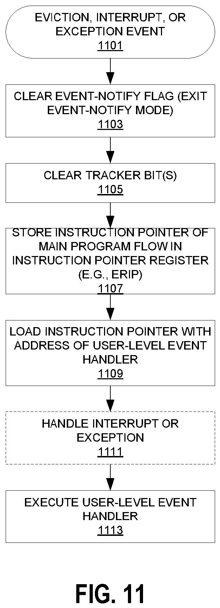

Figure 4A illustrates the state of the TLBs 236, 272 and the caches 234, 275 at some point in time, e.g., after executing the first five instructions in Table 1. If a security-critical event occurs prior to exiting the event-notify mode, the core 290 clears (or causes logic associated with the cache(s)/TLB(s) to clear all of the set T-bits along with other operations (e.g., clearing the event-notify status flag), as was the case with the ENEND instruction described above with reference to Figure 3D. The state after clearing T-bits is illustrated in Figure 4B. In addition to clearing T-bits, the core 290 performs additional operations such as redirecting program flow for any threads that have a set T-bit for the cache/TLB entry associated with the security-critical event. Additional detail regarding these operations is found below with reference to Figure 11. In the example illustrated between Figures 4A and 4B, the evicted entry in the data cache unit 274 has a set T-bit for the first thread, so the core 290 would cause the program flow of the associated program executing within the first thread to redirect to the user-level event handler. Exemplary Instructions

**Figure 5** illustrates embodiments of an ENBEGIN instruction 510, an ENEND instruction 520, a MOVCIP instruction 530, a PRELOAD (e.g., PREFETCH) CACHE instruction 540, PRELOAD (e.g., PREFETCH) TLB instruction 550, and an ENCALL instruction 560. The ENBEGIN instruction 510 includes an operation code (OPCODE) field 502 that includes a value that decode circuitry can use to identify the ENBEGIN instruction 510. An immediate, register, or memory location operand 512 includes or identifies the entry-point (i.e., a memory address) of the user-level event handler. In some embodiments, the ENBEGIN instruction 540 also includes an immediate, register, or memory location operand 514 that includes or identifies a value that enables or disables (e.g., mask) security-critical events based on the affected cache or TLB. For example, the operand 514 may be a 4-bit value where each bit indicates whether to monitor for security-critical events in the instruction TLB unit 236, the data TLB unit 272, the instruction cache unit 234, and the data cache unit 274, respectively. In some embodiments, one or both of the operands 512 or 514 may be omitted and their respective contents located in implicit register(s) associated with the ENBEGIN instruction 510. Upon executing the ENBEGIN instruction 510, execution circuitry places the core 290 in event-notify mode by setting the event-notify status flag and loads the location of the entry-point of the user-level event handler in the ERIP register.

The ENEND instruction 520 includes an opcode field 502 that includes a value that decode circuitry can use to identify the ENEND instruction 520. Upon executing the ENEND instruction 520, execution circuitry removes the core 290 from event-notify mode by clearing the event-notify status flag and clearing any set T-bits in the cache(s)/TLB(s) or causing any set T-bits to be cleared.

The (optional) MOVCIP instruction 530 includes an opcode field 502 that includes a value that decode circuitry can use to identify the MOVCIP instruction 530. The MOVCIP instruction 530 allows a software program to store the value in the CIP register. In some embodiments, the MOVCIP instruction 530 includes a register or memory location operand 532 that identifies the location where the value in the CIP should be stored. Upon executing the MOVCIP instruction with operand 532, execution circuitry stores the value in the CIP register in the identified location. In some embodiments, the MOVCIP instruction 530 includes no operands, and upon executing the MOVCIP instruction 530, execution circuitry pushes the contents of the CIP register onto a stack for the software program. As described elsewhere herein, the user-level event handler can use the MOVCIP instruction 530 to store the location of the main flow of the software program so that it can be resumed after the core 290 redirects execution to the user-level event handler when a security-critical event occurs in event-notify mode. In certain embodiments, the MOVCIP instruction is not utilized when using an ENCALL instruction. In certain embodiments, a CIP register (e.g., separate from RIP and ERIP) is not utilized.

The PRELOAD CACHE instruction 540 (e.g., ENPF instruction) includes an opcode field 502 that includes a value that decode circuitry can use to identify the PRELOAD CACHE instruction 540. The PRELOAD CACHE instruction 540 provides a simple way to preload code into the instruction cache unit 234 or data into the data cache unit 274. A register or memory location operand 542 includes or identifies a memory location of a data structure containing the data to be "pinned" into the cache (e.g., the memory address contained within the cache line to be prefetched and tracked). The data structure may correspond to the format of entries in the data cache unit 274. In one embodiment, an immediate, register, or memory location operand 544 includes or identifies whether the data structure is loaded into the instruction cache unit 234 or into the data cache unit 274. For example, a "1" might indicate that the data structure is to be loaded into the instruction cache unit 234 and a "0" might indicate that the data structure is to be loaded into the data cache unit 274. An immediate, register, or memory location operand 546 includes or identifies permissions associated with the cached entries (e.g., a "1" indicates read-only while a "0" indicates read or write permission). In some embodiments, one or more of operands 542, 544, and 546 may be omitted and their respective contents located in implicit register(s) associated with the PRELOAD CACHE instruction 540. For example, RAX might store a value associated with the description of operand 542, RBX might store a value associated with the description of operand 544, and RCX might store a value associated with the description of operand 546. Upon executing the PRELOAD CACHE instruction 540, execution circuitry loads the data in the data structure from memory into the the data cache unit with the identified permissions in certain embodiments.

The PRELOAD TRANSLATION LOOKASIDE BUFFER (TLB) instruction 550 includes an opcode field 502 that includes a value that decode circuitry can use to identify the PRELOAD TLB instruction 550. The PRELOAD TLB instruction 550 (e.g., ENPFPG instruction) provides a simple way to preload a translation (e.g., a virtual address to physical address mapping) into the TLB (e.g., data TLB unit 272 in Figure 2). An immediate value, register, or memory location operand 552 includes or identifies a memory location of a data structure (e.g., memory page) that is to have its translation prefetched into the TLB (e.g., with specified permission) and sets the tracking bit (e.g., t-bit) for that entry in the TLB. Permission associated with a TLB entry may be such that a first value (e.g., a "1") indicates read-only while a second, different value (e.g., "0") indicates read or write permission. In some embodiments, operand 552 may be omitted and its respective contents located in implicit register(s) associated with the PRELOAD TLB instruction 550. For example, RAX might store a value associated with the description of operand 552. Upon executing the PRELOAD TLB instruction 550, execution circuitry loads the translation for the address into the designated TLB.

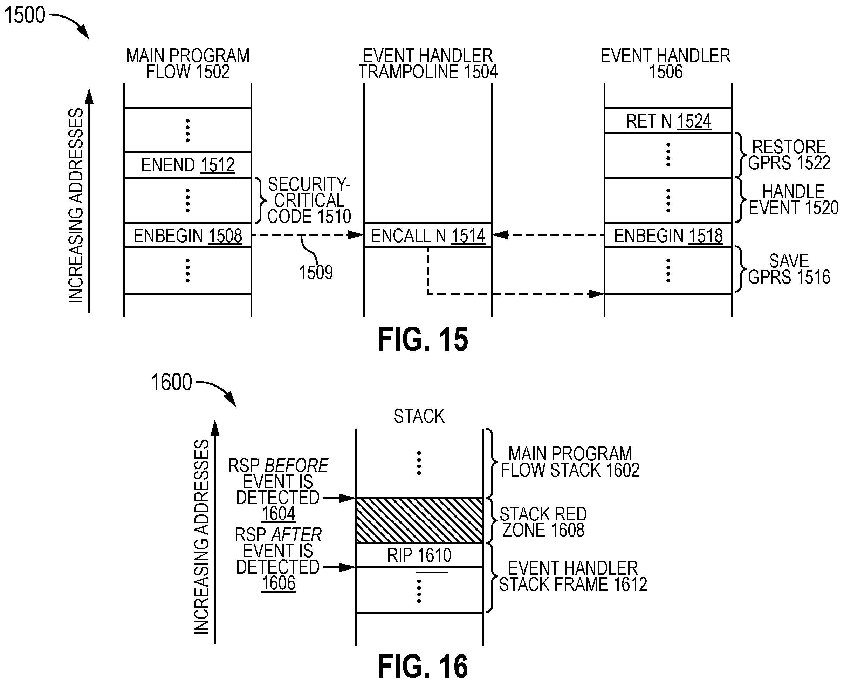

The ENCALL instruction 560 includes an operation code (OPCODE) field 502 that includes a value that decode circuitry can use to identify the ENCALL instruction 560. An immediate, register, or memory location operand 562 includes or identifies the entry-point (e.g., a memory address or pointer to the memory address) of a user-level event handler (e.g., with the entry-point set by software to point to the user-level event handler). In one embodiment, operand 562 identifies the relative offset of the user-level event handler. In some embodiments, the ENCALL instruction 560 also includes an immediate, register, or memory location operand 564 that includes or identifies a number of bits (or bytes) by which to change (e.g., decrement or increment depending on the stack) a stack pointer to a (e.g., call) stack. In some embodiments, one or both of the operands 562 or 564 may be omitted and their respective contents located in implicit register(s) associated with the ENCALL instruction 560. Upon executing the ENCALL instruction 560, execution circuitry (e.g., for a core 290 in event-notify mode) is to (e.g., after a swap of an instruction pointer that indicates where an event occurred from a current instruction pointer register into a user-level event handler pointer register (e.g., ERIP)) push the instruction pointer that indicates where the event occurred onto call stack storage, and change a current instruction pointer in the current instruction pointer register (e.g., RIP) to the instruction pointer to the user-level event handler. In one embodiment, instead of using both a register (e.g., CIP) that stores a copy (e.g., but does not control execution) of the instruction pointer that indicates where the event occurred and a register (e.g., EIP) that indicates a trampoline to the user-level event handler, a single register (e.g., ERIP) is used to store an IP to a trampoline routine (e.g., the routine including an ENCALL instruction) to the user-level event handler, and then (e.g., after a swap of RIP and ERIP) that single register (e.g., ERIP) is used to store a copy of the instruction pointer that indicates where the event occurred (e.g., and that copy is then pushed to a stack). In one embodiment, a register swap operation to swap contents of RIP and ERIP is part of event detection routine (e.g., that also causes jump 1509 in Figure 15). Certain embodiments herein utilize an ENCALL instruction without also utilizing a MOVCIP instruction or a PRELOAD instruction (e.g., but can utilize PRELOAD CACHE or PRELOAD TLB discussed herein).

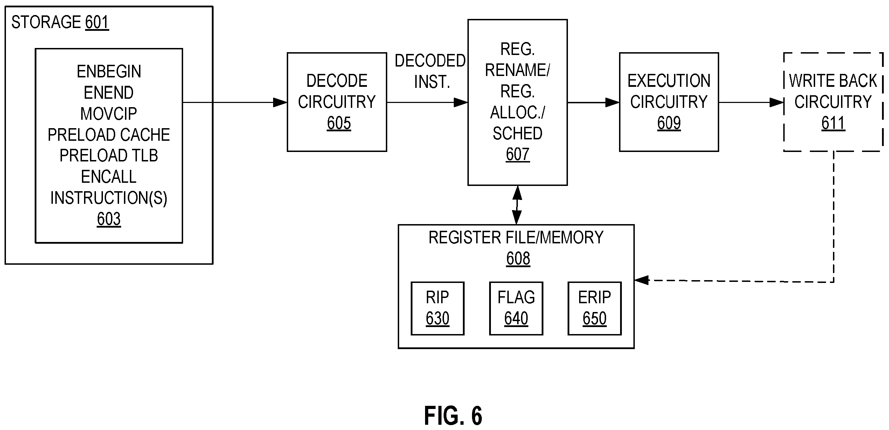

**Figure 6** illustrates an embodiment of hardware to process the exemplary instructions illustrated in Figure 5. As illustrated, storage 601 stores instruction(s) 603 to be executed, including an ENBEGIN instruction, an ENEND instruction, a MOVCIP instruction, and a PRELOAD CACHE instruction. The instruction is received by decode circuitry 605. For example, the decode circuitry 605 receives this instruction from fetch logic/circuitry. Decode circuitry 605 may correspond to the decode unit 240 in Figure 2, and the fetch logic/circuitry may correspond to the instruction fetch unit 238 in Figure 2.

As illustrated in Figure 5, the instructions 603 include a field for an opcode and zero or more operands, depending on the instruction 603. The decode circuitry 605 decodes the instruction into one or more operations. In some embodiments, this decoding includes generating a plurality of micro-operations to be performed by execution circuitry (such as the execution engine unit 250 in Figure 2). For example, the decode circuitry 605 may break a preload operation into multiple memory read operations based on a known size of the data structure being loaded into the instruction cache unit 234 or the data cache unit 274.

In some embodiments, register renaming, register allocation, and/or scheduling circuitry 607 provides functionality for one or more of: 1) renaming logical operand values to physical operand values (e.g., a register alias table in some embodiments), 2) allocating status bits and flags to the decoded instruction, and 3) scheduling the decoded instruction for execution on execution circuitry out of an instruction pool (e.g., using a reservation station in some embodiments). Registers (register file) and/or memory 608 store data as operands of the instruction to be operated on by execution circuitry, including the above-described RIP register 630 (e.g., current instruction pointer register), ERIP register 650, and register including the event-notify status flag 640. Exemplary register types include packed data registers, general-purpose registers, and floating-point registers. In one embodiment, a save of processor extended states (e.g., as caused by decoding and executing of an XSAVE instruction) is to save the contents of the ERIP register 650 but not save the contents of the event-notify status flag 640 storage. In one embodiment, setting an IP into RIP sets execution to begin next at the IP, e.g., but storing data into ERIP (or CIP) does not.

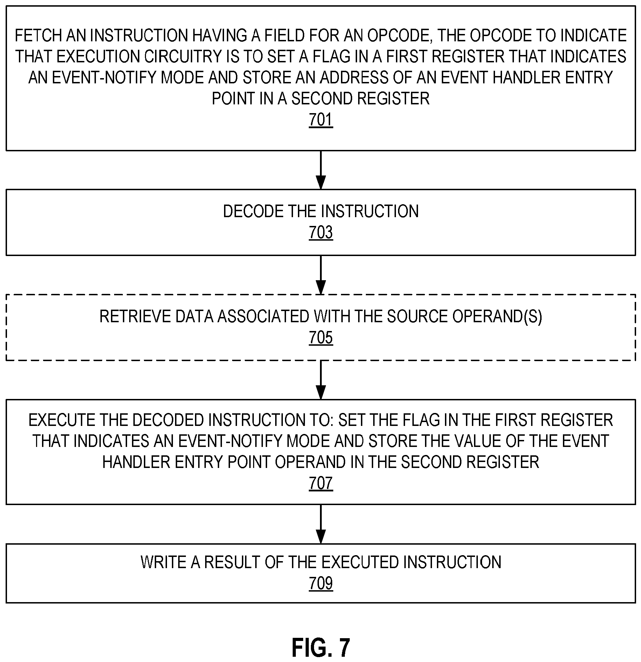

Execution circuitry executes 609 the decoded instruction. The execution of the decoded instruction causes the execution circuitry to perform operations based on the decoded instruction, as detailed below with reference to Figures 7-13.

Write back (retirement) circuitry 611 commits the result of the execution of the decoded instruction (if any). In some embodiments, retirement/write back circuitry architecturally commits the destination register into the registers or memory and retires the instruction.

**Figure 7** illustrates an embodiment of method performed by a processor to process a ENBEGIN instruction. For example, the stages of the pipeline 200 in Figure 2A, the core 290 of Figure 2B, or the hardware illustrated in Figure 6 perform this method.

At 701, an instruction is fetched. For example, an ENBEGIN instruction is fetched by the fetch stage 202 or the instruction fetch unit 238. As described above with reference to Figure 5, the ENBEGIN instruction includes a field for an opcode, the opcode to indicate that execution circuitry is to set a flag in a first register that indicates an event-notify mode and to store the event handler entry point operand in a second register. The ENBEGIN instruction may include an explicit operand or be associated with an implicit operand that identifies an event handler entry point. The ENBEGIN instruction may further include an explicit operand or be associated with an implicit operand that identifies which cache(s) or TLB(s) should trigger redirection to the event handler upon the occurrence of a security-critical event.

At 703, the fetched instruction is decoded. For example, the fetched ENBEGIN instruction is decoded by the decode stage 206, the decode unit 240, or the decode circuitry 605.

At 705, data values associated with the explicit or implicit operands of the decoded instruction are retrieved. For example, if the implicit or explicit operand(s) include a reference to a register or a memory location that contains the entry-point address of the user-level event handler, the entry-point address is retrieved.

At 707, the decoded instruction is executed by execution circuitry such as the execution stage 216, the execution engine unit 250 (e.g., an execution unit 262), or execution circuitry 609. For the ENBEGIN instruction, the execution will cause execution circuitry to set the event-notify status flag in a register to indicate that the core 290 is in event-notify mode and to store the address of the user-level event handler in the second register (e.g., the ERIP register, described above).

At 709, the result of the executed instruction is written. For example, the write back/memory write stage 218, memory access unit(s) 264, execution unit(s) 262, or write back circuitry 611 sets the event-notify status flag in storage (e.g., register) 640 and writes the address of the user-level event handler to the ERIP register 650.

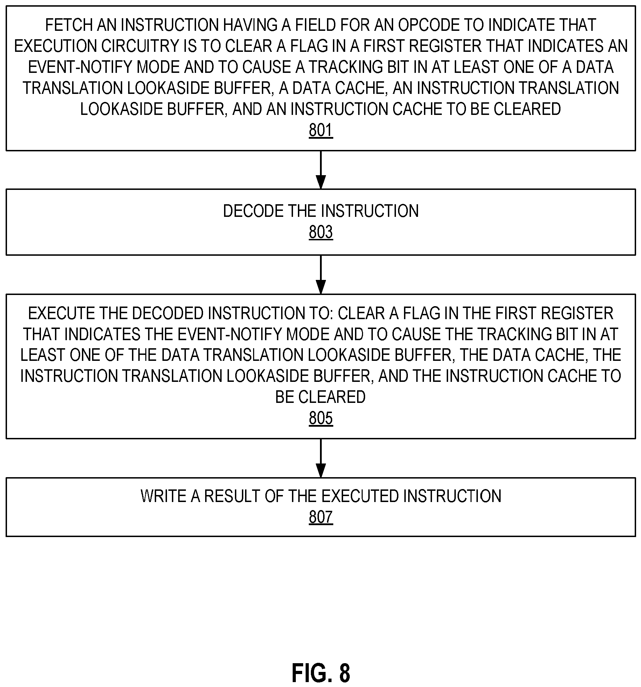

**Figure 8** illustrates an embodiment of method performed by a processor to process a ENEND instruction. For example, the stages of the pipeline 200 in Figure 2A, the core 290 of Figure 2B, or the hardware illustrated in Figure 6 perform this method.

At 801, an instruction is fetched. For example, an ENEND instruction is fetched by the fetch stage 202 or the instruction fetch unit 238. As described above with reference to Figure 5, the ENEND instruction includes a field for an opcode, the opcode to indicate that execution circuitry is to clear a flag in a first register that indicates an event-notify mode and to cause a tracking bit in at least one of a data TLB, a data cache, an instruction TLB, and an instruction cache to be cleared. For example, if operand 514 masked eviction events in the instruction TLB and instruction cache, the opcode may cause only T-bits in the data TLB and data cache to be cleared. In some embodiments, all the T-bits in the TLBs and caches are cleared upon exiting the event-notify mode.

At 803, the fetched instruction is decoded. For example, the fetched ENEND instruction is decoded by the decode stage 206, the decode unit 240, or the decode circuitry 605.

At 805, the decoded instruction is executed by execution circuitry such as the execution stage 216, the execution engine unit 250 (e.g., an execution unit 262), or execution circuitry 609. For the ENEND instruction, the execution will cause execution circuitry to clear a flag in the first register that indicates the event-notify mode (e.g., the event-notify status flag). The execution will further cause the T-bit in at least one of the data TLB, the data cache, the instruction TLB, and the instruction cache to be cleared. For example, the execution will cause the execution circuitry to reset or overwrite T-bits in the cache(s) or TLB(s), or cause logic associated with the cache(s) or TLB(s) to reset or overwrite the T-bits.

At 807, the result of the executed instruction is written. For example, the w1rite back/memory write stage 218, memory access unit(s) 264, execution unit(s) 262, or write back circuitry 611 clears the event-notify status flag in storage (e.g., register) 640.

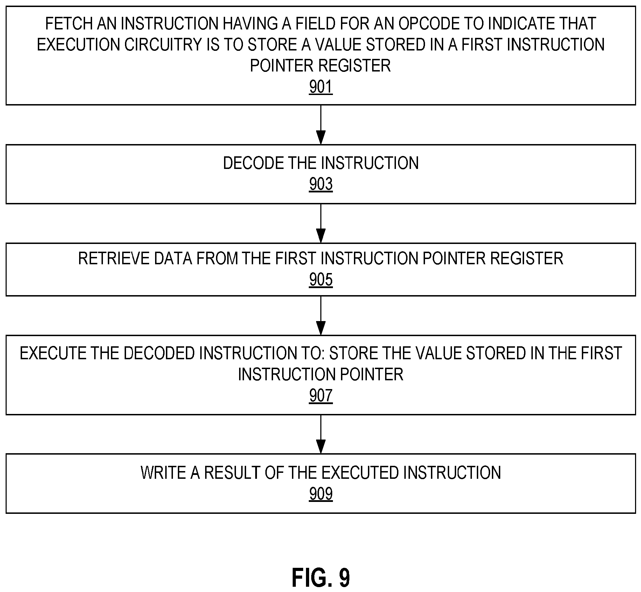

**Figure 9** illustrates an embodiment of method performed by a processor to process a MOVCIP instruction. For example, the stages of the pipeline 200 in Figure 2A, the core 290 of Figure 2B, or the hardware illustrated in Figure 6 perform this method.

At 901, an instruction is fetched. For example, a MOVCIP instruction is fetched by the fetch stage 202 or the instruction fetch unit 238. As described above with reference to Figure 5, the MOVCIP instruction includes a field for an opcode, the opcode to indicate that execution circuitry is to store a value stored in a first instruction pointer register (e.g., a CIP register). In some embodiments, the MOVCIP instruction further includes a register or memory location operand that identifies the location where the value in the first instruction pointer register should be stored. In other embodiments where the MOVCIP instruction does not include an operand, the instruction indicates that execution circuitry is to store the value in the first instruction pointer register onto a stack in a memory.

At 903, the fetched instruction is decoded. For example, the fetched ENEND instruction is decoded by the decode stage 206, the decode unit 240, or the decode circuitry 605.

At 905, data values associated with the decoded instruction are retrieved. In particular, the value of the first instruction pointer register (e.g., from a CIP register) is retrieved.

At 907, the decoded instruction is executed by execution circuitry such as the execution stage 216, the execution engine unit 250 (e.g., an execution unit 262), or execution circuitry 609. For the MOVCIP instruction, the execution will cause execution circuitry to store the value stored in the first instruction pointer register (e.g., the CIP register as retrieved at 905) in the location identified by the operand (if the instruction includes an operand that identifies the location to store the pointer) or onto the stack in the memory (if the instruction does not include an operand identifying the location to store the pointer).

At 909, the result of the executed instruction is written. For example, the write back/memory write stage 218, memory access unit(s) 264, execution unit(s) 262, or write back circuitry 611 writes the value from the first instruction pointer register to the stack in memory or to the location specified by the operand (if present). For example, if the execution circuitry buffered the write at 907, the buffered operation is performed at 909.

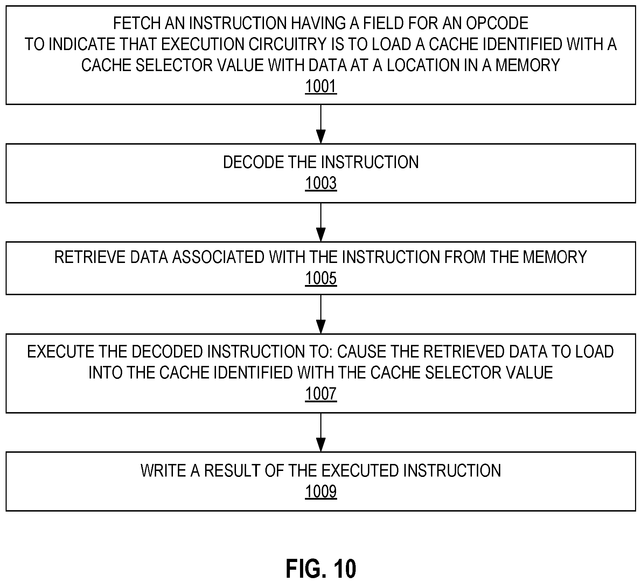

**Figure 10** illustrates an embodiment of method performed by a processor to process a PRELOAD (e.g., PRETETCH or ENPF) instruction. For example, the stages of the pipeline 200 in Figure 2A, the core 290 of Figure 2B, or the hardware illustrated in Figure 6 perform this method.

At 1001, an instruction is fetched. For example, a PRELOAD CACHE instruction is fetched by the fetch stage 202 or the instruction fetch unit 238. As described above with reference to Figure 5, the PRELOAD CACHE instruction includes a field for an opcode, the opcode to indicate that execution circuitry is to indicate that execution circuitry is to load a cache identified with a cache selector value with data at a location in a memory. The PRELOAD CACHE instruction may include an explicit operand or be associated with an implicit operand that identifies the location of the data in the memory as described herein. The PRELOAD CACHE instruction may further include an explicit operand or be associated with an implicit operand that includes or identifies the cache selector value (e.g., whether the destination for the data in memory is an instruction cache or a data cache) as described herein. The PRELOAD CACHE instruction may further include an explicit operand or be associated with an implicit operand that includes or identifies the read/write permissions associated with the loaded cache entries as described herein.

At 1003, the fetched instruction is decoded. For example, the fetched PRELOAD CACHE instruction is decoded by the decode stage 206, the decode unit 240, or the decode circuitry 605.

At 1005, data values associated with the decoded instruction are retrieved. In particular, the data in the memory that is to be loaded into the identified cache (i.e., instruction or data) is retrieved. Further, if any of the operands are implicit operands, the data stored in the location of each implicit operand is retrieved (e.g., the read/write permission value; the value indicating whether the data from memory is loaded into the data or the instruction cache).

At 1007, the decoded instruction is executed by execution circuitry such as the execution stage 216, the execution engine unit 250 (e.g., an execution unit 262), or execution circuitry 609. For the PRELOAD CACHE instruction, the execution will cause execution circuitry to cause the retrieved data to load into the cache identified with the cache selector value. For example, the execution circuitry loads the data in the data cache or the instruction cache, as identified by the cache selector value, and subject to the read/write permissions, if specified.

At 1009, the result of the executed instruction is written. For example, the write back/memory write stage 218, memory access unit(s) 264, execution unit(s) 262, or write back circuitry 611 writes the data from the memory into the identified cache.

**Figure 11** illustrates an embodiment of method performed by a processor in response to an event that occurs while in the event-notify mode. For example, the stages of the pipeline 200 in Figure 2A, the core 290 of Figure 2B, the hardware illustrated in Figure 6, and/or any microcode associated thereof (collectively, firmware/hardware) perform this method.

The method begins at 1101 upon the occurrence of a cache or TLB eviction, interrupt, or other security-critical event. For example, the method begins when the firmware/hardware is in the event-notify mode and identifies an eviction a cache or a TLB entry that has a set T-bit. Further, if the event-notify mode was enabled only for certain cache(s) or TLB(s), e.g., via operand 514, the method begins if all of the requisite conditions are satisfied (e.g., the core 290 is in event-notify mode, an eviction occurs of an entry with a set T-bit, the eviction is in a cache or TLB that is not masked).

At 1103, the firmware/hardware clears the event-notify status flag in the register to take the processor out of the event-notify mode. At 1105, the firmware/hardware clears the set T-bits in the cache(s) and/or TLB(s). At 1107, the firmware/hardware stores the instruction pointer of the software program flow in an instruction pointer register (e.g., swaps RIP and ERIP). For example, if the instruction pointer (e.g., in RIP) of the main software program flow was at 0x10F0 when the security-critical event occurred, the firmware/hardware writes the value 0x10F0 to the ERIP register and writes the IP for the trampoline routine (e.g., the routine including an ENCALL instruction) into RIP (e.g., by swapping the contents of RIP and ERIP). At 1109, once the instruction pointer of the software program flow is stored, the firmware/hardware loads the instruction pointer register (e.g., the program counter) (e.g., RIP) with the entry-point of the trampoline (e.g., the value initially stored in the ERIP register) to the user-level event handler for the software program which will cause the software program to redirect its program flow to the event handler. In one embodiment, the trampoline includes an ENCALL instruction, that when decoded and executed, causes a jump of the execution to the user-level event handler (e.g., after pushing the security-critical event IP from ERIP onto a stack). At 1111, the firmware/hardware (and any supporting software) handle the interrupt or other exception that was the trigger of the security-critical event (e.g., for external interrupts or exceptions) to defeat a possible side-channel attack. Once the firmware/hardware returns to the software program, the firmware/hardware begins execution of the software program at the instruction that caused the user-level event handler to be invoked, as indicated at 1113. By storing the instruction pointer of the software program when the security-critical event occurs in the ERIP register and loading the current instruction pointer with the trampoline IP (e.g., with the trampoline routine including an ENCALL instruction), when the software program continues execution, the firmware/hardware redirects the execution back to the instruction that caused the user-level event handler to be invoked.

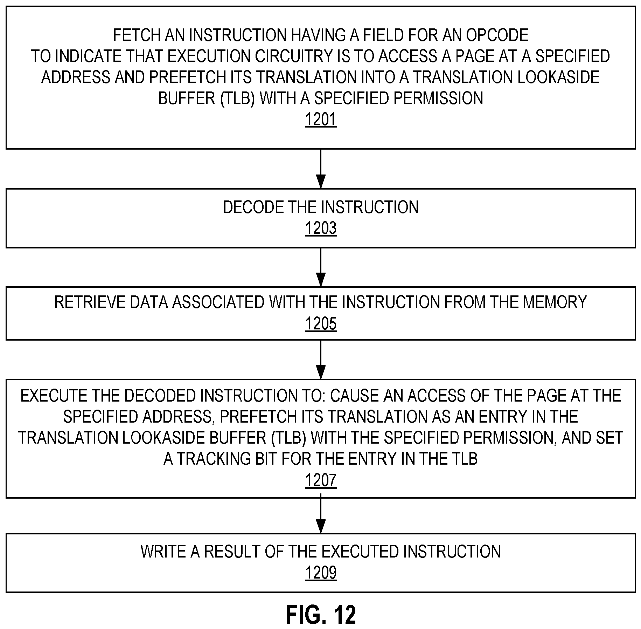

**Figure 12** illustrates an embodiment of a method performed by a processor to process a PRELOAD TLB instruction. At 1201, an instruction is fetched. For example, a PRELOAD TLB instruction is fetched by the fetch stage 202 or the instruction fetch unit 238. As described above with reference to Figure 5, the PRELOAD TLB instruction includes a field for an opcode, the opcode to indicate that execution circuitry is to indicate that execution circuitry is to access a page at a specified address and prefetch its translation into a translation lookaside buffer (TLB) (e.g., with a specified permission). The PRELOAD TLB instruction may include an explicit operand or be associated with an implicit operand that identifies the location of the specified address in the memory as described herein. The PRELOAD TLB instruction may further include an explicit operand or be associated with an implicit operand that includes or identifies the read/write permissions associated with the loaded TLB entry as described herein.

At 1203, the fetched instruction is decoded. For example, the fetched PRELOAD TLB instruction is decoded by the decode stage 206, the decode unit 240, or the decode circuitry 605.

At 1205, data values associated with the decoded instruction are retrieved. In particular, the memory page for the specified address is retrieved. Further, if any of the operands are implicit operands, the data stored in the location of each implicit operand is retrieved (e.g., the read/write permission value).

At 1207, the decoded instruction is executed by execution circuitry such as the execution stage 216, the execution engine unit 250 (e.g., an execution unit 262), or execution circuitry 609. For the PRELOAD TLB instruction, the execution will cause execution circuitry to cause an access of the page at the specified address, prefetch its translation as an entry in the translation lookaside buffer (TLB) with the specified permission, and set a tracking bit for the entry in the TLB. For example, the execution circuitry loads the translation for the specified (virtual) address into an entry in a TLB and sets the tracking bit (t-bit) according to the disclosure herein.

At 1209, the result of the executed instruction is written. For example, the write back/memory write stage 218, memory access unit(s) 264, execution unit(s) 262, or write back circuitry 611 writes the data into the TLB.

In certain embodiments, the A ("accessed") bit is set in the page-table entry for each page that is prefetched by a PRELOAD TLB instruction (e.g., ENPFPG instruction). In certain embodiments, if the page is writable, its D ("dirty") bit is also set, e.g., to mitigate controlled-channel attacks against secure enclaves.

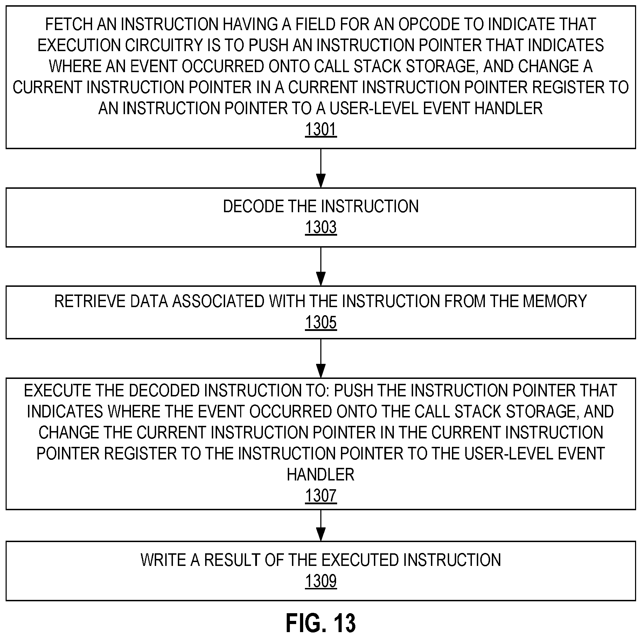

**Figure 13** illustrates an embodiment of a method performed by a processor to process an ENCALL instruction. At 1301, an instruction is fetched. For example, an ENCALL instruction is fetched by the fetch stage 202 or the instruction fetch unit 238. As described above with reference to Figure 5, the ENCALL instruction includes a field for an opcode, the opcode to indicate that execution circuitry is to indicate that execution circuitry is to push an instruction pointer that indicates where an event (e.g., exception) occurred onto call stack storage, and change a current instruction pointer in a current instruction pointer register to an instruction pointer to a user-level event handler. The ENCALL instruction may include an explicit operand or be associated with an implicit operand that identifies the entry-point (e.g., a memory address or pointer to the memory address) of a user-level event handler. The ENCALL instruction may include an explicit operand or be associated with an implicit operand that identifies a number of bits (or bytes) by which to change (e.g., decrement or increment depending on the stack) a stack pointer to a (e.g., call) stack.

At 1303, the fetched instruction is decoded. For example, the fetched ENCALL instruction is decoded by the decode stage 206, the decode unit 240, or the decode circuitry 605.

At 1305, data values associated with the decoded instruction are retrieved. In particular, the contents of the ERIP register are retrieved in one embodiment. Further, if any of the operands are implicit operands, the data stored in the location of each implicit operand is retrieved (e.g., the number of bits to change the stack pointer).

At 1307, the decoded instruction is executed by execution circuitry such as the execution stage 216, the execution engine unit 250 (e.g., an execution unit 262), or execution circuitry 609. For one embodiment of the ENCALL instruction, the execution causes execution circuitry to cause a push of the instruction pointer that indicates where the event occurred onto the call stack storage, and a change of the current instruction pointer in the current instruction pointer register to the instruction pointer to the user-level event handler.

At 1309, the result of the executed instruction is written. For example, the write back/memory write stage 218, memory access unit(s) 264, execution unit(s) 262, or write back circuitry 611 writes the data to the stack and changes the current IP (RIP) register to point to the user-level event handler (e.g., so that it is executed next).

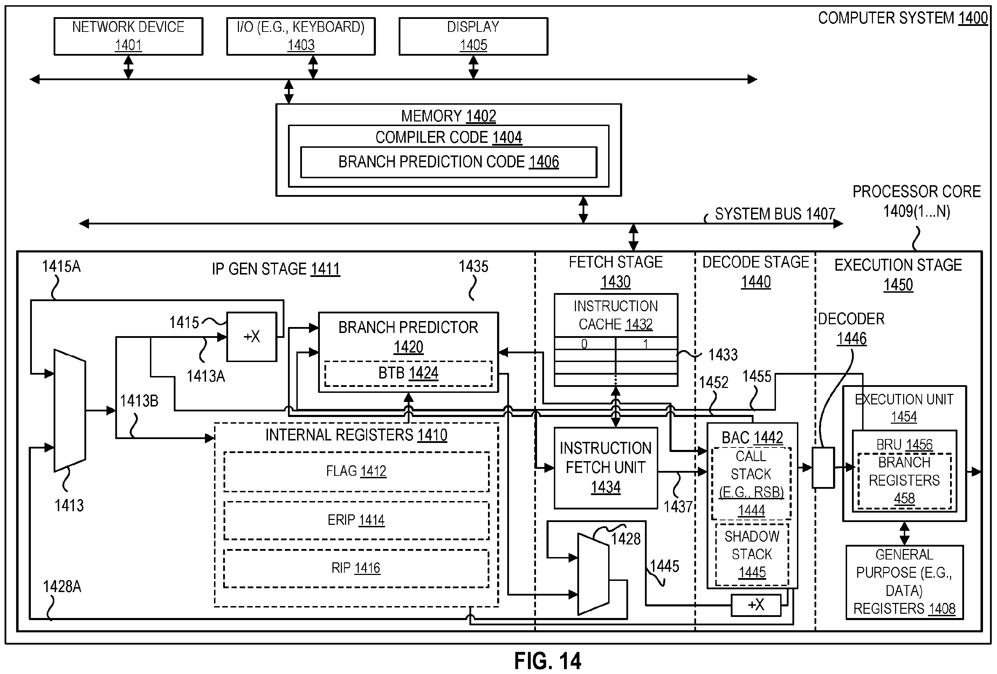

**Figure 14** illustrates a computer system 1400 including a branch predictor 1420 and a branch address calculator 1442 (BAC) in a pipelined processor core 1409(1)-1409(N) according to embodiments of the disclosure. Referring to Figure 14, a pipelined processor core (e.g., 1409(1)) includes an instruction pointer generation (IP Gen) stage 1411, a fetch stage 1430, a decode stage 1440, and an execution stage 1450. In one embodiment, each core of processor 100 in Figure 1 is an instance of processor core 1409(1-N), where N is any positive integer. In certain embodiments, each processor core 1409(1-N) instance supports multithreading (e.g., executing two or more parallel sets of operations or threads on a first and second logical core), and may do so in a variety of ways including time sliced multithreading, simultaneous multithreading (e.g., where a single physical core provides a logical core for each of the threads that physical core is simultaneously multithreading), or a combination thereof (e.g., time sliced fetching and decoding and simultaneous multithreading thereafter). In the depicted embodiment, each single processor core 1409(1) to 1409(N) includes an instance of branch predictor 1420. Branch predictor 1420 may include a branch target buffer (BTB) 1424. In certain embodiments, branch target buffer 1424 stores (e.g., in a branch predictor array) the predicted target instruction corresponding to each of a plurality of branch instructions (e.g., branch instructions of a section of code that has been executed multiple times). In the depicted embodiment, a branch address calculator (BAC) 1442 is included which accesses (e.g., includes) a call stack 1444, e.g., a return stack buffer (RSB) embodiment of a call stack. In certain embodiments, return stack buffer 1444 is to store (e.g., in a stack data structure of last data in is the first data out (LIFO)) the return addresses, e.g., of any CALL instructions (e.g., that push their return address on the stack).

In certain embodiments, a branch address calculator (BAC) 1442 is to calculate addresses for certain types of branch instructions and/or to verify branch predictions made by a branch predictor (e.g., BTB). In certain embodiments, the branch address calculator performs branch target and/or next sequential linear address computations. In certain embodiments, the branch address calculator performs static predictions on branches based on the address calculations.

In certain embodiments, the branch address calculator 1442 contains a return stack buffer 1444 to keep track of the return addresses of the CALL instructions. In one embodiment, the branch address calculator attempts to correct any improper prediction made by the branch predictor 1420 to reduce branch misprediction penalties. As one example, the branch address calculator verifies branch prediction for those branches whose target can be determined solely from the branch instruction and instruction pointer.

In certain embodiments, the branch address calculator 1442 maintains the return stack buffer 1444 utilized as a branch prediction mechanism for determining the target address of return instructions, e.g., where the return stack buffer operates by monitoring all "call subroutine" and "return from subroutine" branch instructions. In one embodiment, when the branch address calculator detects a "call subroutine" branch instruction, the branch address calculator pushes the address of the next instruction onto the return stack buffer, e.g., with a top of stack pointer marking the top of the return stack buffer. By pushing the address immediately following each "call subroutine" instruction onto the return stack buffer, the return stack buffer contains a stack of return addresses in this embodiment. When the branch address calculator later detects a "return from subroutine" branch instruction, the branch address calculator pops the top return address off of the return stack buffer, e.g., to verify the return address predicted by the branch predictor 1420. In one embodiment, for an indirect branch type, the branch address calculator is to (e.g., always) predict taken for a conditional branch, for example, and if the branch predictor does not predict taken for the indirect branch, the branch address calculator overrides the branch predictor's missed prediction or improper prediction.

Turning to the specific circuitry in Figure 14, certain features are provided to validate branch predictions made by the branch predictor 1420. Each branch predictor 1420 entry (e.g., in BTB 1424) may further includes a valid field and a bundle address (BA) field which are used to increase the accuracy and validate branch predictions performed by the branch predictor 1420, as is discussed in more detail below. In one embodiment, the valid field and the BA field each consist of one bit fields. In other embodiments, however, the size of the valid and BA fields may vary. In one embodiment, a fetched instruction is sent (e.g., by BAC 1442 from line 1437) to the decoder 1446 to be decoded, and the decoded instruction is sent to the execution unit 1454 to be executed.

Depicted computer system 1400 includes a network device 1401, input/output (I/O) circuit 1403 (e.g., keyboard), display 1405, and a system bus (e.g., interconnect) 1407.

In one embodiment, the branch instructions stored in the branch predictor 1420 are pre-selected by a compiler as branch instructions that will be taken. In certain embodiments, the compiler code 1404, as shown stored in the memory 1402 of Figure 14, includes a sequence of code that, when executed, translates source code of a program written in a high-level language into executable machine code. In one embodiment, the compiler code 1404 further includes additional branch predictor code 1406 that predicts a target instruction for branch instructions (for example, branch instructions that are likely to be taken (e.g., pre-selected branch instructions)). The branch predictor 1420 (e.g., BTB 1424 thereof) is thereafter updated with target instruction for a branch instruction. As discussed below, depicted core (e.g., branch predictor 1420 thereof) includes access to one or more registers (e.g., registers in any figure herein). In certain embodiments, a core includes one or more of general purpose register(s) 1408, flag storage register(s) 1412, user-level event handler trampoline pointer (ERIP) register 1414, or current instruction pointer (RIP) register 1416. In one embodiment, each logical core has its own flag storage register(s) 1412, user-level event handler pointer (ERIP) register 1414, current instruction pointer (RIP) register 1416, or any combination thereof.

In certain embodiments, each entry for the branch predictor 1420 (e.g., in BTB 1424 thereof) includes a tag field and a target field. In one embodiment, the tag field of each entry in the BTB stores at least a portion of an instruction pointer (e.g., memory address) identifying a branch instruction. In one embodiment, the tag field of each entry in the BTB stores an instruction pointer (e.g., memory address) identifying a branch instruction in code. In one embodiment, the target field stores at least a portion of the instruction pointer for the target of the branch instruction identified in the tag field of the same entry. Moreover, in other embodiment, the entries for the branch predictor 1420 (e.g., in BTB 1424 thereof) includes one or more other fields. In certain embodiments, an entry does not include a separate field to assist in the prediction of whether the branch instruction is taken, e.g., if a branch instruction is present (e.g., in the BTB), it is considered to be taken.

As shown in Figure 14, the IP Gen mux 1413 of IP generation stage 1411 receives an instruction pointer from line 1414A. The instruction pointer provided via line 1415A is generated by the incrementer circuit 1415, which receives a copy of the most recent instruction pointer (e.g., from RIP register 1416) from the path 1413A. The incrementer circuit 1415 may increment the present instruction pointer by a predetermined amount, to obtain the next sequential instruction from a program sequence presently being executed by the core.

In one embodiment, upon receipt of the IP from IP Gen mux 1413, the branch predictor 1420 compares a portion of the IP with the tag field of each entry in the branch predictor 1420 (e.g., BTB 1424). If no match is found between the IP and the tag fields of the branch predictor 1420, the IP Gen mux will proceed to select the next sequential IP as the next instruction to be fetched in this embodiment. Conversely, if a match is detected, the branch predictor 1420 reads the valid field of the branch predictor entry which matches with the IP. If the valid field is not set (e.g., has logical value of 0) the branch predictor 1420 considers the respective entry to be "invalid" and will disregard the match between the IP and the tag of the respective entry in this embodiment, e.g., and the branch target of the respective entry will not be forwarded to the IP Gen Mux. On the other hand, if the valid field of the matching entry is set (e.g., has a logical value of 1), the branch predictor 1420 proceeds to perform a logical comparison between a predetermined portion of the instruction pointer (IP) and the branch address (BA) field of the matching branch predictor entry in this embodiment. If an "allowable condition" is present, the branch target of the matching entry will be forwarded to the IP Gen mux, and otherwise, the branch predictor 1420 disregards the match between the IP and the tag of the branch predictor entry.

More specifically, in one embodiment, the BA field indicates where the respective branch instruction is stored within a line of cache memory 1432. In certain embodiments, a processor is able to initiate the execution of multiple instructions per clock cycle, wherein the instructions are not interdependent and do not use the same execution resources.

For example, each line of the instruction cache 1432 shown in Figure 14 includes multiple instructions (e.g., six instructions). Moreover, in response to a fetch operation by the fetch unit 1434, the instruction cache 1432 responds (e.g., in the case of a "hit") by providing a full line of cache to the fetch unit 1434 in this embodiment. The instructions within a line of cache may be grouped as separate "bundles." For example, as shown in Figure 14, the first three instructions in a cache line 1433 may be addressed as bundle 0, and the second three instructions may be address as bundle 1. Each of the instructions within a bundle are independent of each other (e.g., can be simultaneously issued for execution). The BA field provided in the branch predictor 1420 entries is used to identify the bundle address of the branch instruction which corresponds to the respective entry in certain embodiments. For example, in one embodiment, the BA identifies whether the branch instruction is stored in the first or second bundle of a particular cache line.

In one embodiment, the branch predictor 1420 performs a logical comparison between the BA field of a matching entry and a predetermined portion of the IP to determine if an "allowable condition" is present. For example, in one embodiment, the fifth bit position of the IP (e.g. IP[4]) is compared with the BA field of a matching (e.g., BTB) entry. In one embodiment, an allowable condition is present when IP [4] is not greater than the BA. Such an allowable condition helps prevent the apparent unnecessary prediction of a branch instruction, which may not be executed. That is, when less than all of the IP is considered when doing a comparison against the tags of the branch predictor 1420, it is possible to have a match with a tag, which may not be a true match. Nevertheless, a match between the IP and a tag of the branch predictor indicates a particular line of cache, which includes a branch instruction corresponding to the respective branch predictor entry, may about to be executed. Specifically, if the bundle address of the IP is not greater than the BA field of the matching branch predictor entry, then the branch instruction in the respective cache line is soon to be executed. Hence, a performance benefit can be achieved by proceeding to fetch the target of the branch instruction in certain embodiments.

As discussed above, if an "allowable condition" is present, the branch target of the matching entry will be forwarded to the IP Gen mux in this example. Otherwise, the branch predictor will disregard the match between the IP and the tag. In one embodiment, the branch target forwarded from the branch predictor is initially sent to a Branch Prediction (BP) resteer mux 128, before it is sent to the IP Gen mux. The BP resteer mux 1428, as shown in Figure 14, may also receive instruction pointers from other branch prediction devices. In one embodiment, the input lines received by the BP resteer mux will be prioritized to determine which input line will be allowed to pass through the BP resteer mux onto the IP Gen mux.

In addition to forwarding a branch target to the BP resteer mux, upon detecting a match between the IP and a tag of the branch predictor, the BA of the matching branch predictor entry is forwarded to the Branch Address Calculator (BAC) 1442. The BAC 1442 is shown in Figure 14 to be located in the decode stage 1440, but may be located in other stage(s). The BAC of may also receive a cache line from the fetch unit 1434 via line 1437.

The IP selected by the IP Gen mux is also forwarded to the fetch unit 1434, via data line 1435 in this example. Once the IP is received by the fetch unit 1434, the cache line corresponding to the IP is fetched from the instruction cache 1432. The cache line received from the instruction cache is forwarded to the BAC, via data line 1437.

Upon receipt of the BA in this example, the BAC will read the BA to determine where the pre-selected branch instruction (e.g., identified in the matching branch predictor entry) is located in the next cache line to be received by the BAC (e.g., the first or second bundle of the cache line). In one embodiment, it is predetermined where the branch instruction is located within a bundle of a cache line (e.g., in a bundle of three instructions, the branch instruction will be stored as the second instruction).

In alternative embodiments, the BA includes additional bits to more specifically identify the address of the branch instruction within a cache line. Therefore, the branch instruction would not be limited to a specific instruction position within a bundle.

After the BAC determines the address of the pre-selected branch instruction within the cache line, and has received the respective cache line from the fetch unit 1434, the BAC will decode the respective instruction to verify the IP truly corresponds to a branch instruction. If the instruction addressed by BA in the received cache line is a branch instruction, no correction for the branch prediction is necessary. Conversely, if the respective instruction in the cache line is not a branch instruction (i.e., the IP does not correspond to a branch instruction), the BAC will send a message to the branch predictor to invalidate the respective branch predictor entry, to prevent similar mispredictions on the same branch predictor entry. Thereafter, the invalidated branch predictor entry will be overwritten by a new branch predictor entry.

In addition, in one embodiment, the BAC will increment the IP by a predetermined amount and forward the incremented IP to the BP resteer mux 1428, via data line 1445, e.g., the data line 1445 coming from the BAC will take priority over the data line from the branch predictor. As a result, the incremented IP will be forwarded to the IP Gen mux and passed to the fetch unit in order to correct the branch misprediction by fetching the instructions that sequentially follow the IP.

### Updating the Branch Predictor Entries

In one embodiment, the branch predictor is updated by the BAC and the Branch Resolution Unit (BRU) 1456. For example, when the compiler translates a "high-level" branch instruction into a machine level instruction for execution, the compiler will provide a "predict instruction" to be executed prior to the respective branch instruction. The predict instruction can be used to update the branch predictor.

In one embodiment, the predict instruction includes two immediate operands. The first immediate operand is an offset of the respective branch instruction's memory address. The second immediate operand is an offset of the branch instruction's target address. Alternatively, the predict instruction may identify a branch register (BR) 1458 (or a general purpose register (GPR) 1408) storing the address of the branch instruction and/or the branch target.

The predict instruction may also include an "important hint" (ih) field, which when set by the branch predictor of the compiler, indicates the respective branch instruction is likely to be taken. The branch prediction of the compiler may statically set the ih field of a predict instruction based on the operation (op) code of the respective branch instruction (e.g., unconditional branch, return branch, conditional branch, etc.). Alternatively, the branch predictor may generate a profile for the respective branch instruction, and set the ih field of the predict instruction, according to the history of the respective branch instruction.

As a result, in one embodiment, when the BAC receives a predict instruction which has an ih field that is set, the BAC will forward, via data path 1452, at least part of the branch instruction's memory address and the target of the branch instruction to branch predictor, as shown in Figure 14. Upon receipt of the data, the branch predictor will proceed to update an entry of the branch predictor, with the data received from the BAC in this example.

In addition, the branch predictor entries can also be updated by the Branch Resolution Unit (BRU) 1456, which is shown in Figure 14 to be included in the 1452. More specifically, certain branch instructions are referred to as indirect branching instructions, wherein the branch target is stored in a branch register(s) 1458. In one embodiment, the branch registers are provided in the BRU 1456 as shown in Figure 14.

Registers in computer system 1400 (e.g., internal registers 1410) may include one or more of flag storage register(s) 1412, user-level event handler pointer (ERIP) register 1414, or current instruction pointer (RIP) register 1416, e.g., in addition to other control registers. In one embodiment, each logical core has its own respective flag storage register(s) 1412, user-level event handler pointer (ERIP) register 1414, current instruction pointer (RIP) register 1416. or any combination thereof. In one embodiment, a plurality of logical cores share a single register, e.g., share one or more general purpose (e.g., data) registers 1408.

In certain embodiments, special instructions, prior to the indirect branch instructions, are used to store the branch targets in the branch registers. That is, when the compiler is translating a higher level indirect branch instruction into a machine level instruction, the compiler generates a set branch register (set_BR) instruction, that is to be executed prior the actual indirect branch instruction. When executed, the set_BR instructions will write the target address of an indirect branch instruction into a branch register.

For example, the set_BR instruction may transfer the value of the branch target value from a register (e.g., GPR) 1408 to a branch register 1458. Alternatively, the branch target may be included in the set_BR instruction as an offset, which could be added to the memory address of the set_BR instruction to obtain the address of the respective branch target. The address of the branch target could then be written into the BR to be used by the indirect branch instruction which follows.

In one embodiment, the set_BR instruction further identifies the address of the respective indirect branch instruction. For example, the address may be included as an offset which, once again, can be added to the memory address of the respective set_BR instruction to obtain the address of the indirect branch instruction. In one embodiment, the set_BR instruction includes the "important hint" (ih) field, as described above.

In one embodiment, when the BRU receives a set_BR instruction, the BRU sends to the branch predictor, via data path 1455, at least part of the respective branch instruction's memory address and at least part of the branch instruction's target. In one embodiment, the BRU also sends the ih field of the set_BR instruction. If the ih field is set, the branch predictor will proceed to update an entry of the branch predictor with the data received from the BRU in this example. Otherwise, the branch predictor will disregard the data received from the BRU. Alternatively, the BRU may read the ih field of the set_BR instruction to determine whether to transmit the data to the branch predictor.

In addition to running user applications and an operating system, a processor (e.g., core) may run a virtual machine monitor (VMM) which in turn manages multiple virtual machines (VMs) running on the processor.

### Example utilizing an ENCALL instruction:

A side channel may generally refer to an unintentional transfer of information through a hardware or software mechanism not specifically designed to transfer information. For example, logical processor (P0) (e.g., on a core) may evict a cache slot that was occupied by memory being used by another logical processor P1 (e.g., on the same core as P0). In certain embodiments, P1's next access to the same memory will then be measurably slower-a hint that P0 may have accessed memory corresponding to the evicted cache slot.

In certain embodiments, a side-channel attack occurs when a malicious OS, hypervisor, or user-space software application is able to capture secret information from a victim application through a side channel. The ability of a software application to defend itself against side-channel attacks may be constrained by its limited view of architectural and microarchitectural platform state. In the prior example, the victim application cannot feasibly determine whether or not a cache line is present at a particular cache level before it attempts to access data on that line.

A malicious OS/hypervisor may abuse its privileged responsibilities to mount a controlled-channel attack against a secure enclave. For example, the host can selectively evict a subset of the enclave's pages from memory. When the enclave attempts to access any page in this set, the hardware will signal a page fault exception to the host with the address of the page that faulted, and the enclave will exit. Thus, the host is able to learn which page the enclave attempted to access in this example. By repeatedly forcing page faults in this manner, the host can construct a complete trace of enclave execution at page granularity. In certain embodiments, controlled-channel attacks against secure enclaves include (i) using programmable interrupts (via an advanced programmable interrupt controller (APIC)) to single-step enclave execution, (ii) observing any update to the access/dirty (A/D) bits in the enclave's page tables, then pausing the enclave and resetting the bits, or (iii) launching a cache side-channel attack against the enclave's page tables while the enclave is running to recover the trace of any page walk(s), then pause the enclave to flush its TLB entries, and thus force additional page walks when the enclave resumes.

The embodiments herein describe Instruction Set Architecture (ISA) extensions that allows application software to subscribe to notifications for architectural events (e.g., interrupts/exceptions) and microarchitectural events (e.g., cache eviction). Software can use these notifications to deploy countermeasures against side-channel attacks.

Certain embodiments herein do not require a complete redesign of the cache architecture, which would be expensive in terms of design and validation efforts, and may have negative performance and power impact for non-security-critical applications. Certain embodiments herein can mitigate all of the attacks, e.g., including attacks other than those that exploit secret-dependent control flow instead of secret-dependent data flow, e.g., without degrading performance significantly. Certain embodiments herein mitigate side-channel attacks against secure enclaves (or any shielded execution), e.g., without requiring system software being in the trusted computed base (e.g., which is incompatible with certain secure enclave threat models). Certain embodiments herein provide a way for an application to protect itself from side channel attacks, e.g., without being implementation specific, with addressing multiple attacks (e.g., hyperthreading attacks, attacks that exploit TLB misses, etc.), without introducing unnecessary overhead, without only addressing a subset of the cache-based attacks, and/or with being applicable to controlled-channel attacks.

Certain embodiments herein address side-channel attacks with minimum software and/or hardware overhead by adding ISA extensions, e.g., as discussed in reference to Figure 5. In one embodiment, the ISA extensions provide user-space applications with a new execution mode: event-notify mode. Within certain embodiments of event-notify mode, a software thread can subscribe to notifications for architectural and microarchitectural events such as interrupts, exceptions, cache evictions, and TLB evictions. Applications can use these notifications to effectively pin their security-critical code and data into the TLB/cache, and thus mitigating program secrets from being leaked through an architectural or microarchitectural side channel.

Certain embodiments herein provide user-space applications with a lightweight mechanism of ISA extensions to protect themselves from cache-based side channel attacks, e.g., allowing secure enclaves to defeat controlled-channel attacks. The ISA extensions may include any of the following instructions: ENBEGIN, ENEND, ENCALL, PRELOAD (e.g., ENPF), or PRELOAD TLB (e.g., ENPFPG). The ISA extensions may utilize FLAG and ERIP registers. The ISA extensions may utilize track bits (t-bits) to mark security-critical entries in the CPU's caching structures, e.g., for each logical processor. In one embodiment, if a tracked resource is evicted, the thread executing on that logical processor will be notified directly by the processor (e.g., ISA instruction(s) executing on the processor), allowing the thread to react to the event (e.g., by taking corrective measures). In one embodiment, threads use these ISA extensions to enforce security invariants to defeat cache-based and controlled-channel attacks.

As one example, the decoding and execution of an ENBEGIN instruction puts the current thread into event-notify mode. In one embodiment, the ENBEGIN instruction takes a single operand: the effective address of an event handler (e.g., the address of an event handler trampoline routine that includes an ENCALL instruction) which is stored in ERIP (e.g., ERIP in 1414 in Figure 14). In certain embodiments, the thread will exit event-notify mode if any of the following occurs: (i) a subscribed event is detected on the logical processor on which the thread is executing, (ii), the thread invokes an instruction that causes the ISA to no longer be able to track events for the thread (e.g., a SYSCALL instruction that when decoded and executed switches from user mode to kernel mode), or (iii) the thread explicitly exits event notify mode by issuing an ENEND instruction (e.g., that is decoded and executed by the processor). In certain embodiments, occurrence of (a), (b), or (c) cause all tracking bits (e.g., T-bits) to be cleared for the logical processor. In one embodiment, either of (i) or (ii) additionally causes the processor (e.g., CPU) to jump to the event handler (e.g., event handler trampoline) (e.g., by jumping to the address in the ERIP instead of the address in the RIP) when the thread resumes user-mode execution, e.g., RIP and ERIP are swapped. In the case of an interrupt, exception, or SYSCALL event, in one embodiment the OS is to perform a state save (e.g., by decoding and executing an XSAVE instruction that saves a processor's extended states) for the ERIP register to preserve its contents. In one embodiment, the event handler trampoline is a single ENCALL instruction which takes the effective address of the event handler and, optionally, a fixed number of bytes to push onto the (e.g., call) stack before jumping to the event handler (e.g., to protect the stack red zone). In one embodiment (for example, after decrementing the stack pointer (e.g., return stack pointer (RSP)), decoding and execution of an ENCALL instruction pushes the value from ERIP (e.g., which because of the above-mentioned swap is now the pre-swap value of RIP) onto the (e.g., user-space) stack, and then jumps execution to the event handler (e.g., the address for the event handler being an operand of the ENCALL instruction). An embodiment of the memory layout of an event handler and event handler trampoline code is depicted in Figure 15.

**Figure 15** illustrates an example code flow 1500 for an event-notify mode according to embodiments of the disclosure. Depicted code flow 1500 includes a main program flow 1502, an event handler trampoline 1504, and an event handler 1506. In the depicted embodiment, main program flow 1502 includes an ENBEGIN instruction 1508 before security-critical code 1510 and an ENEND instruction 1512 following the security-critical code 1510, e.g., to turn on and the off, respectively, the notifications discussed herein.

In one embodiment, on detection of either of (i) a subscribed event occurring on the logical processor on which the thread is executing or (ii) the thread invoking (e.g., decoding and executing) an instruction that causes the processor (e.g., ISA thereof) to no longer be able to track events for the thread: the logical processor (e.g., logical core) jumps 1509 execution to the event handler trampoline 1504 (e.g., by swapping contents of an ERIP that stored the IP to the event handler trampoline 1502 into RIP with contents of an RIP that stored the IP when the event occurred) . Depicted event handler trampoline 1504 includes an ENCALL instruction 1514. Decoding and execution of ENCALL instruction 1514 causes a jump of execution to event handler 1506 (e.g., and a push of a pointer where (i) or (ii) were detected). Depicted event handler 1506 (e.g., when executed) is to save 1516 the volatile register (e.g., ERIP) and flag (e.g., from flag register) state, reenter event-notify mode by invoking another ENBEGIN instruction 1518, handle the event(s) 1520, restore 1522 the volatile register and flag state, invoke a return instruction (e.g., RET instruction) (e.g., where N is the number of bytes that was pushed onto the stack by ENCALL instruction 1514). In one embodiment, where an ENCALL instruction has pushed the previous value of RIP (e.g., via pushing the data from the ERIP register storing that IP for when the event occurred) onto the stack as the return address for the call, the return instruction will resume execution at the point where the event was detected. In one embodiment, an ENCALL instruction is to, when decoded and executed, check the flag bit to determine that the logical processor is not already executing in event-notify mode, for example, and cause a general protection fault (GP) to issue if the logical processor is already executing in event-notify mode. In one embodiment, a CALL instruction pushes the RIP register contents onto the stack and an ENCALL instruction pushes the ERIP register contents onto the stack. In one embodiment (e.g., when in event-notify mode), ENCALL instruction (e.g., also) pushes the ERIP register contents to the shadow stack.

**Figure 16** illustrates a stack 1600 used in an event-notify mode according to embodiments of the disclosure. In one embodiment, decoding and execution of an ENCALL instruction is to push the same data to two instances of stack 1600 (e.g., a call stack and a shadow stack). Depicted stack 1600 shows an example of the data that decoding and execution of an ENCALL instruction pushes onto the stack 1600 and the changing of the pointer (e.g., return stack pointer (RSP)) from a value before an event (e.g., (i) or (ii) discussed in reference to Figure 15) is detected 1604, and after the event is detected 1606. In certain embodiments, decoding and execution of an ENCALL instruction pushes the RIP 1610 (e.g., the IP when the event occurred) onto stack 1600, but that IP is sourced from ERIP. Optionally, a stack 1600 may include a red zone 1608 (e.g., stack space used as a scratch space without moving the pointer). Thus, the decoding an executing of an ENCALL instruction may include moving the pointer to prevent any overwriting of RIP 1610 (e.g., the "current" IP when the event occurred) as well as the stack red zone 1608. Previous data on the stack may be main program flow stack 1602.

In one embodiment, by default, if a thread executing in event-notify mode is interrupted or if it triggers an exception, execution will resume at the event handler trampoline after the interrupt/exception has been serviced by the OS. Thus, in this embodiment, the thread is notified that it was interrupted. This feature may be essential where the ISA cannot track other events for the thread while it is suspended. Thus, in this embodiment, when a thread is resumed (and its event handler is invoked), the thread should assume that any combination or number of events to which it had subscribed may have occurred while it was suspended.

In certain embodiments, a thread subscribes to cache and TLB eviction event notifications by using the PRELOAD CACHE instruction and a PRELOAD TLB instruction, respectively. In one embodiment, the operand to a PRELOAD CACHE instruction is an effective memory address, whose corresponding cache line is prefetched into all levels of the cache hierarchy. In one embodiment, the operand to a PRELOAD TLB instruction is an effective memory address, whose corresponding address translation is loaded into all levels of the TLB. In certain embodiments, cache lines and TLB entries prefetched in this manner are tracked by having their T bits set. In one embodiment, if any resource with its T bit set is evicted while the thread is executing in event-notify mode, the logical processor will exit event-notify mode, clear the thread's watch set, and jump to the event handler trampoline. Figures 3A-4B depict an example on how the T bits in the cache structures are changed when executed normally (e.g., in Figures 3A-3D) and when there is a cache eviction event within event notify mode (e.g., in Figures 4A-4B). Note that when a tracked resource is evicted, all the threads that have the T bit set for that resource will be signaled in certain embodiments.

Example Mitigation Strategy 1: A program can use event-notify mode and its primitives to proactively protect security-critical code and data from side channel information leakage. In particular, a security-critical code segment can be wrapped within the ENBEGIN and ENEND primitives. Before executing the security-critical code segment, all the security-critical code/data can be preloaded into cache structures-including TLB and cache-using the prefetching instructions. Whenever a subscribed event (e.g., including interrupt/exception) is detected, the event handler is invoked. This handler can then re-enter event-notify mode, reload (e.g., prefetch) the security-critical code/data, and then resume execution at the instruction where the event was originally detected. In certain embodiments, this strategy causes security-critical code/data and translations to always be resident in the L1 caches and TLBs while the program is executing in event notify mode.

Example Mitigation Strategy 2: User-space software can use event-notify mode to detect when it may be under attack. For instance, the event handler can increment a counter each time an event is detected, and the user can define a security policy in terms of this counter (e.g., when exceeding a threshold). Some example policies include, "terminate after n events are detected while the enclave is running," "if n events occur during the call to Function(), terminate", or "if at any point during enclave execution, the ratio of events to memory accesses exceeds 1:1000, terminate." In one embodiment, the last policy uses compiler assistance to count the number of memory accesses made within each basic block, and updates another counter accordingly.

Security Analysis: in some cases, a necessary pre-condition of controlled-channel and cache-based side channel attacks is that the attacker is able to evict/flush the victim's TLB entry/cache line (e.g., either from another thread on the same core, or by interrupting the victim), and then observe a subsequent secret-dependent access to one of those structures. In certain embodiments, if the eviction occurs while the victim is in event-notify mode, the victim will be notified. If the eviction occurs while victim thread is interrupted (e.g., not in event-notify mode), the victim will also be notified as soon as the thread is resumed in one embodiment. In both cases, the victim will deterministically reload its security-critical code/data, before making any secret-dependent accesses to it (e.g., assuming Mitigation Strategy 1) in certain embodiments. Hence the adversary will not be able to observe any secret-dependent accesses made by the victim, since all of those accesses will hit in the L1 caches and TLBs in this embodiment.

Exemplary architectures, systems, etc. that the above may be used in are detailed below.

### Exemplary Program Flows

Various program flows can leverage the instructions and associated firmware/hardware features disclosed herein to protect security-critical code and/or data. The following examples illustrate a sequence of operations performed by software programs that include a preamble routine and a security-critical routine in conjunction with hardware and/or firmware to prevent leakage of security-critical code or data.

In a first example, a processor (e.g., the core 290) executes a software program without interruption by a security-critical event. In a main flow of the software program, the software program calls the preamble routine. The preamble routine includes an ENBEGIN instruction, followed by a PRELOAD CACHE instruction to preload an instruction or data cache and/or PRELOAD TLB instruction to preload a TLB. When the preamble routine completes (i.e., the cache is loaded), program flow returns to the main flow. In the main flow, the software program performs the security-critical processing (or calls a security-critical routine). Once the security-critical processing is complete, the software program issues the ENEND instruction.

In a second example, a processor (e.g., the core 290) executes a software program and a security-critical event occurs during the security-critical routine of the software program (e.g., during the security-critical routine 115). In this example, the security-critical event is a cache eviction of a tracked cache entry (e.g., with a T-bit). The software program flow calls the preamble routine, which includes the ENBEGIN instruction and performs the cache preloading with the PRELOAD CACHE instruction. The software program flow continues to the security-critical routine, during the processing of which an eviction of a tracked cache or TLB entry occurs. In response, the firmware/hardware clears the event-notify status flag, clears any set T-bits in the cache(s) and/or TLB(s), stores the instruction pointer of the software program in the ERIP register, and loads the instruction pointer for the software program with the entry-point of the software program's user-level event handler to redirect the program flow to the user-level event handler (e.g., by swapping RIP and ERIP). The ENCALL instruction stores the value stored in the ERIP register onto the program stack in certain embodiments.. Storing the value (e.g., RIP value when the event occurred) stored in the ERIP register onto the stack allows the software program to resume its security-critical routine where it left off when the eviction occurred. The user-level exception then calls the preamble routine to "re-pin" the security-critical code and/or data in the cache(s). Before calling the preamble routine, the user-level event handler may save any flags or other registers on the stack to enable the software program to resume the security-critical routine where it left off after the preamble returns. The preamble routine is executed, including re-initiating the event-notify mode by issuing the ENBEGIN instruction. Once the preamble routine completes, the software program flow returns to the user-level event handler. The user-level event handler restores and flags or registers it preserved before calling the preamble routine from the stack and redirects the program flow to the value of the preserved RIP register. In this manner, the software program resumes executing the security-critical routine having re-loaded the cache(s). Further, by re-loading the cache(s), any observer or attacker cannot ascertain any patterns in the security-critical routine based on cache fills/evictions.

In a third example, a processor (e.g., the core 290) executes a software program and a security-critical event occurs during the preamble routine of the software program (e.g., during the preamble routine 110). In this example, the security-critical event is a cache eviction of a tracked cache entry (e.g., with a T-bit). The software program flow calls the preamble routine, which includes the ENBEGIN instruction. In this example, the preamble routine begins cache preloading with the PRELOAD CACHE instruction. Prior to completing the cache preloading, an eviction of a tracked cache or TLB entry occurs. In response, the firmware/hardware clears the event-notify status flag, clears any set T-bits in the cache(s) and/or TLB(s), stores the instruction pointer of the software program in the ERIP register, and loads the instruction pointer for the software program with the entry-point of the software program's user-level event handler to redirect the program flow to the user-level event handler (e.g., by swapping RIP and ERIP). The ENCALL instructions stores the value stored in the ERIP register onto the program stack (or another specified location) in certain embodiments. The user-level exception then calls the preamble routine to "re-pin" the security-critical code and/or data in the cache(s). The preamble routine is executed, including re-initiating the event-notify mode by issuing the ENBEGIN instruction. The preamble routine can checkpoint its first execution and check whether it was previously interrupted based on the existence of a checkpoint. If the preamble routine determines it was interrupted, the preamble routine can revert the program flow to the checkpoint so that preamble routine is executed from the beginning to completion only once. After the preamble routine is executed, the program flow continues to the security-critical routine.

Note that a first security-critical event could occur within the security-critical routine and subsequently a second security-critical event could occur within the preamble routine that was initiated by the user-level event handler that was handling the first security-critical event. In this case, the user-level event handler called in response to the first event would call the ENCALL instruction to store the instruction pointer of the security-critical program flow and subsequent calls to the user-level event handler (e.g., from the preamble routine) would not. Once the preamble routine has completed once without interruption, the user-level event handler called in response to the first event would issue a RET instruction to allow the software program to resume security-critical routine execution with the re-loaded cache(s). Again, by re-loading the cache(s), any observer or attacker cannot ascertain any patterns in the security-critical routine based on cache fills/evictions.

In a fourth example, a processor (e.g., the core 290) executes a software program and a security-critical event occurs during the security-critical routine of the software program. In this example, the security-critical event is an external interrupt. The software program flow calls the preamble routine, which includes the ENBEGIN instruction and performs the cache preloading with the PRELOAD CACHE instruction. The software program flow continues to the security-critical routine, during the processing of which an external interrupt occurs. In response, the firmware/hardware clears the event-notify status flag, clears any set T-bits in the cache(s) and/or TLB(s), stores the instruction pointer of the software program in the ERIP register, and loads the instruction pointer for the software program with the entry-point of the software program's user-level event handler to redirect the program flow to the user-level event handler. After servicing the external interrupt, the program flow resumes with the user-level event handler. The user-level event handler stores the value stored in the ERIP register onto the program stack. Storing the value in the ERIP register allows the software program to resume its security-critical routine where it left off when the interrupt occurred. The user-level exception then calls the preamble routine to "re-pin" the security-critical code and/or data in the cache(s). Before calling the preamble routine, the user-level event handler may save any flags or other registers on the stack to enable the software program to resume the security-critical routine where it left off after the preamble returns. The preamble routine is executed, including re-initiating the event-notify mode by issuing the ENBEGIN instruction. Once the preamble routine completes, the software program flow returns to the user-level event handler. The user-level event handler restores and flags or registers it preserved before calling the preamble routine from the stack and redirects the program flow to the value of the preserved RIP register. In this manner, the software program resumes executing the security-critical routine. Again, by re-loading the cache(s), any observer or attacker cannot ascertain any patterns in the security-critical routine based on cache fills/evictions.

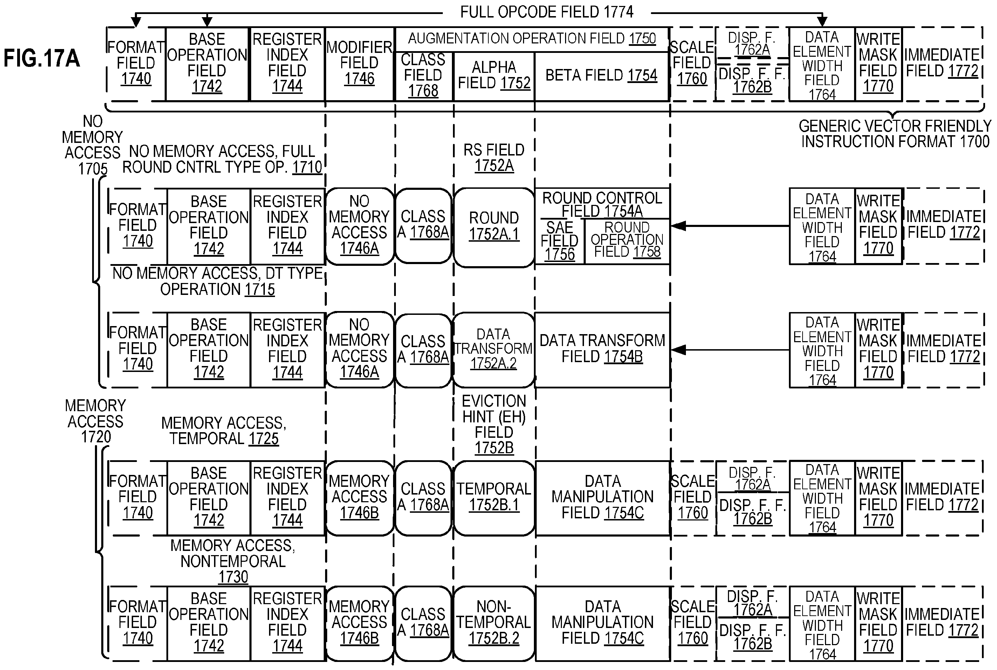

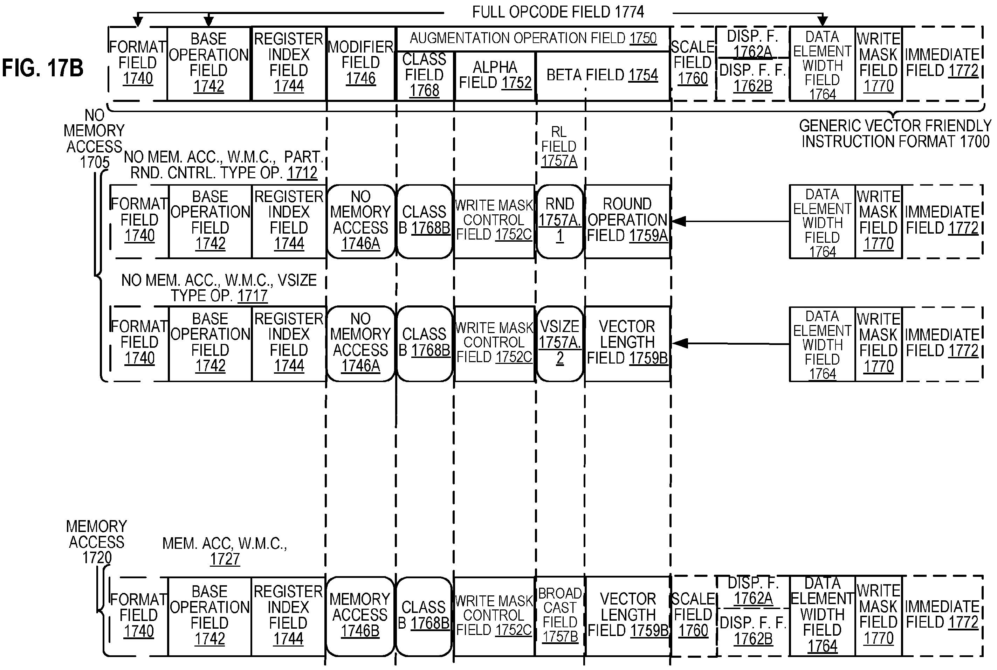

The side-channel protected mode can be implemented across a variety of different core and computer architectures, including in emulation environments, such as those illustrated and described with reference to Figures 17-23.

An instruction set may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or subformats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. A set of SIMD extensions referred to as the Advanced Vector Extensions (AVX) (AVX1 and AVX2) and using the Vector Extensions (VEX) coding scheme has been released and/or published (e.g., see Intel^{®} 64 and IA-32 Architectures Software Developer's Manual, November 2018; and see Intel^{®} Architecture Instruction Set Extensions Programming Reference, October 2018).

### Exemplary Instruction Formats

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

### Generic Vector Friendly Instruction Format

A vector friendly instruction format is an instruction format that is suited for vector instructions (e.g., there are certain fields specific to vector operations). While embodiments are described in which both vector and scalar operations are supported through the vector friendly instruction format, alternative embodiments use only vector operations the vector friendly instruction format.

**Figures 17A-17B** are block diagrams illustrating a generic vector friendly instruction format and instruction templates thereof according to embodiments of the disclosure. **Figure 17A** is a block diagram illustrating a generic vector friendly instruction format and class A instruction templates thereof according to embodiments of the disclosure; while **Figure 17B** is a block diagram illustrating the generic vector friendly instruction format and class B instruction templates thereof according to embodiments of the disclosure. Specifically, a generic vector friendly instruction format 1700 for which are defined class A and class B instruction templates, both of which include no memory access 1705 instruction templates and memory access 1720 instruction templates. The term generic in the context of the vector friendly instruction format refers to the instruction format not being tied to any specific instruction set.

While embodiments of the disclosure will be described in which the vector friendly instruction format supports the following: a 64 byte vector operand length (or size) with 32 bit (4 byte) or 64 bit (8 byte) data element widths (or sizes) (and thus, a 64 byte vector consists of either 16 doubleword-size elements or alternatively, 8 quadword-size elements); a 64 byte vector operand length (or size) with 16 bit (2 byte) or 8 bit (1 byte) data element widths (or sizes); a 32 byte vector operand length (or size) with 32 bit (4 byte), 64 bit (8 byte), 16 bit (2 byte), or 8 bit (1 byte) data element widths (or sizes); and a 16 byte vector operand length (or size) with 32 bit (4 byte), 64 bit (8 byte), 16 bit (2 byte), or 8 bit (1 byte) data element widths (or sizes); alternative embodiments may support more, less and/or different vector operand sizes (e.g., 256 byte vector operands) with more, less, or different data element widths (e.g., 128 bit (16 byte) data element widths).

The class A instruction templates in **Figure 17A** include: 1) within the no memory access 1705 instruction templates there is shown a no memory access, full round control type operation 1710 instruction template and a no memory access, data transform type operation 1715 instruction template; and 2) within the memory access 1720 instruction templates there is shown a memory access, temporal 1725 instruction template and a memory access, non-temporal 1730 instruction template. The class B instruction templates in **Figure 17B** include: 1) within the no memory access 1705 instruction templates there is shown a no memory access, write mask control, partial round control type operation 1712 instruction template and a no memory access, write mask control, vsize type operation 1717 instruction template; and 2) within the memory access 1720 instruction templates there is shown a memory access, write mask control 1727 instruction template.

The generic vector friendly instruction format 1700 includes the following fields listed below in the order illustrated in **Figures 17A-17B****.**

Format field 1740 - a specific value (an instruction format identifier value) in this field uniquely identifies the vector friendly instruction format, and thus occurrences of instructions in the vector friendly instruction format in instruction streams. As such, this field is optional in the sense that it is not needed for an instruction set that has only the generic vector friendly instruction format.

Base operation field 1742 - its content distinguishes different base operations.

Register index field 1744 - its content, directly or through address generation, specifies the locations of the source and destination operands, be they in registers or in memory. These include a sufficient number of bits to select N registers from a PxQ (e.g. 32x512, 16x128, 32x1024, 64x1024) register file. While in one embodiment N may be up to three sources and one destination register, alternative embodiments may support more or less sources and destination registers (e.g., may support up to two sources where one of these sources also acts as the destination, may support up to three sources where one of these sources also acts as the destination, may support up to two sources and one destination).

Modifier field 1746 - its content distinguishes occurrences of instructions in the generic vector instruction format that specify memory access from those that do not; that is, between no memory access 1705 instruction templates and memory access 1720 instruction templates. Memory access operations read and/or write to the memory hierarchy (in some cases specifying the source and/or destination addresses using values in registers), while non-memory access operations do not (e.g., the source and destinations are registers). While in one embodiment this field also selects between three different ways to perform memory address calculations, alternative embodiments may support more, less, or different ways to perform memory address calculations.

Augmentation operation field 1750 - its content distinguishes which one of a variety of different operations to be performed in addition to the base operation. This field is context specific. In one embodiment of the disclosure, this field is divided into a class field 1768, an alpha field 1752, and a beta field 1754. The augmentation operation field 1750 allows common groups of operations to be performed in a single instruction rather than 2, 3, or 4 instructions.

Scale field 1760 - its content allows for the scaling of the index field's content for memory address generation (e.g., for address generation that uses 2^{scale} * index + base).

Displacement Field 1762A- its content is used as part of memory address generation (e.g., for address generation that uses 2^{scale} * index + base + displacement).

Displacement Factor Field 1762B (note that the juxtaposition of displacement field 1762A directly over displacement factor field 1762B indicates one or the other is used) - its content is used as part of address generation; it specifies a displacement factor that is to be scaled by the size of a memory access (N) - where N is the number of bytes in the memory access (e.g., for address generation that uses 2^{scale} * index + base + scaled displacement). Redundant low-order bits are ignored and hence, the displacement factor field's content is multiplied by the memory operands total size (N) in order to generate the final displacement to be used in calculating an effective address. The value of N is determined by the processor hardware at runtime based on the full opcode field 1774 (described later herein) and the data manipulation field 1754C. The displacement field 1762A and the displacement factor field 1762B are optional in the sense that they are not used for the no memory access 1705 instruction templates and/or different embodiments may implement only one or none of the two.

Data element width field 1764 - its content distinguishes which one of a number of data element widths is to be used (in some embodiments for all instructions; in other embodiments for only some of the instructions). This field is optional in the sense that it is not needed if only one data element width is supported and/or data element widths are supported using some aspect of the opcodes.

Write mask field 1770 - its content controls, on a per data element position basis, whether that data element position in the destination vector operand reflects the result of the base operation and augmentation operation. Class A instruction templates support merging-writemasking, while class B instruction templates support both merging- and zeroing-writemasking. When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the write mask field 1770 allows for partial vector operations, including loads, stores, arithmetic, logical, etc. While embodiments of the disclosure are described in which the write mask field's 1770 content selects one of a number of write mask registers that contains the write mask to be used (and thus the write mask field's 1770 content indirectly identifies that masking to be performed), alternative embodiments instead or additional allow the mask write field's 1770 content to directly specify the masking to be performed.

Immediate field 1772 - its content allows for the specification of an immediate. This field is optional in the sense that is it not present in an implementation of the generic vector friendly format that does not support immediate and it is not present in instructions that do not use an immediate.

Class field 1768 - its content distinguishes between different classes of instructions. With reference to **Figures 17A-B**, the contents of this field select between class A and class B instructions. In **Figures 17A-B**, rounded corner squares are used to indicate a specific value is present in a field (e.g., class A 1768A and class B 1768B for the class field 1768 respectively in **Figures 17A-B**).

### Instruction Templates of Class A

In the case of the non-memory access 1705 instruction templates of class A, the alpha field 1752 is interpreted as an RS field 1752A, whose content distinguishes which one of the different augmentation operation types are to be performed (e.g., round 1752A.1 and data transform 1752A.2 are respectively specified for the no memory access, round type operation 1710 and the no memory access, data transform type operation 1715 instruction templates), while the beta field 1754 distinguishes which of the operations of the specified type is to be performed. In the no memory access 1705 instruction templates, the scale field 1760, the displacement field 1762A, and the displacement scale filed 1762B are not present.

### No-Memory Access Instruction Templates - Full Round Control Type Operation

In the no memory access full round control type operation 1710 instruction template, the beta field 1754 is interpreted as a round control field 1754A, whose content(s) provide static rounding. While in the described embodiments of the disclosure the round control field 1754A includes a suppress all floating point exceptions (SAE) field 1756 and a round operation control field 1758, alternative embodiments may support may encode both these concepts into the same field or only have one or the other of these concepts/fields (e.g., may have only the round operation control field 1758).

SAE field 1756 - its content distinguishes whether or not to disable the exception event reporting; when the SAE field's 1756 content indicates suppression is enabled, a given instruction does not report any kind of floating-point exception flag and does not raise any floating point exception handler.

Round operation control field 1758 - its content distinguishes which one of a group of rounding operations to perform (e.g., Round-up, Round-down, Round-towards-zero and Round-to-nearest). Thus, the round operation control field 1758 allows for the changing of the rounding mode on a per instruction basis. In one embodiment of the disclosure where a processor includes a control register for specifying rounding modes, the round operation control field's 1750 content overrides that register value.

### No Memory Access Instruction Templates - Data Transform Type Operation

In the no memory access data transform type operation 1715 instruction template, the beta field 1754 is interpreted as a data transform field 1754B, whose content distinguishes which one of a number of data transforms is to be performed (e.g., no data transform, swizzle, broadcast).

In the case of a memory access 1720 instruction template of class A, the alpha field 1752 is interpreted as an eviction hint field 1752B, whose content distinguishes which one of the eviction hints is to be used (in **Figure 17A****,** temporal 1752B.1 and non-temporal 1752B.2 are respectively specified for the memory access, temporal 1725 instruction template and the memory access, non-temporal 1730 instruction template), while the beta field 1754 is interpreted as a data manipulation field 1754C, whose content distinguishes which one of a number of data manipulation operations (also known as primitives) is to be performed (e.g., no manipulation; broadcast; up conversion of a source; and down conversion of a destination). The memory access 1720 instruction templates include the scale field 1760, and optionally the displacement field 1762A or the displacement scale field 1762B.

Vector memory instructions perform vector loads from and vector stores to memory, with conversion support. As with regular vector instructions, vector memory instructions transfer data from/to memory in a data element-wise fashion, with the elements that are actually transferred is dictated by the contents of the vector mask that is selected as the write mask.

### Memory Access Instruction Templates - Temporal

Temporal data is data likely to be reused soon enough to benefit from caching. This is, however, a hint, and different processors may implement it in different ways, including ignoring the hint entirely.

### Memory Access Instruction Templates - Non-Temporal

Non-temporal data is data unlikely to be reused soon enough to benefit from caching in the 1st-level cache and should be given priority for eviction. This is, however, a hint, and different processors may implement it in different ways, including ignoring the hint entirely.

### Instruction Templates of Class B

In the case of the instruction templates of class B, the alpha field 1752 is interpreted as a write mask control (Z) field 1752C, whose content distinguishes whether the write masking controlled by the write mask field 1770 should be a merging or a zeroing.

In the case of the non-memory access 1705 instruction templates of class B, part of the beta field 1754 is interpreted as an RL field 1757A, whose content distinguishes which one of the different augmentation operation types are to be performed (e.g., round 1757A.1 and vector length (VSIZE) 1757A.2 are respectively specified for the no memory access, write mask control, partial round control type operation 1712 instruction template and the no memory access, write mask control, VSIZE type operation 1717 instruction template), while the rest of the beta field 1754 distinguishes which of the operations of the specified type is to be performed. In the no memory access 1705 instruction templates, the scale field 1760, the displacement field 1762A, and the displacement scale filed 1762B are not present.

In the no memory access, write mask control, partial round control type operation 1710 instruction template, the rest of the beta field 1754 is interpreted as a round operation field 1759A and exception event reporting is disabled (a given instruction does not report any kind of floating-point exception flag and does not raise any floating point exception handler).

Round operation control field 1759A - just as round operation control field 1758, its content distinguishes which one of a group of rounding operations to perform (e.g., Round-up, Round-down, Round-towards-zero and Round-to-nearest). Thus, the round operation control field 1759A allows for the changing of the rounding mode on a per instruction basis. In one embodiment of the disclosure where a processor includes a control register for specifying rounding modes, the round operation control field's 1750 content overrides that register value.

In the no memory access, write mask control, VSIZE type operation 1717 instruction template, the rest of the beta field 1754 is interpreted as a vector length field 1759B, whose content distinguishes which one of a number of data vector lengths is to be performed on (e.g., 128, 256, or 512 byte).

In the case of a memory access 1720 instruction template of class B, part of the beta field 1754 is interpreted as a broadcast field 1757B, whose content distinguishes whether or not the broadcast type data manipulation operation is to be performed, while the rest of the beta field 1754 is interpreted the vector length field 1759B. The memory access 1720 instruction templates include the scale field 1760, and optionally the displacement field 1762A or the displacement scale field 1762B.

With regard to the generic vector friendly instruction format 1700, a full opcode field 1774 is shown including the format field 1740, the base operation field 1742, and the data element width field 1764. While one embodiment is shown where the full opcode field 1774 includes all of these fields, the full opcode field 1774 includes less than all of these fields in embodiments that do not support all of them. The full opcode field 1774 provides the operation code (opcode).

The augmentation operation field 1750, the data element width field 1764, and the write mask field 1770 allow these features to be specified on a per instruction basis in the generic vector friendly instruction format.

The combination of write mask field and data element width field create typed instructions in that they allow the mask to be applied based on different data element widths.

The various instruction templates found within class A and class B are beneficial in different situations. In some embodiments of the disclosure, different processors or different cores within a processor may support only class A, only class B, or both classes. For instance, a high performance general purpose out-of-order core intended for general-purpose computing may support only class B, a core intended primarily for graphics and/or scientific (throughput) computing may support only class A, and a core intended for both may support both (of course, a core that has some mix of templates and instructions from both classes but not all templates and instructions from both classes is within the purview of the disclosure). Also, a single processor may include multiple cores, all of which support the same class or in which different cores support different class. For instance, in a processor with separate graphics and general purpose cores, one of the graphics cores intended primarily for graphics and/or scientific computing may support only class A, while one or more of the general purpose cores may be high performance general purpose cores with out of order execution and register renaming intended for general-purpose computing that support only class B. Another processor that does not have a separate graphics core, may include one more general purpose in-order or out-of-order cores that support both class A and class B. Of course, features from one class may also be implement in the other class in different embodiments of the disclosure. Programs written in a high level language would be put (e.g., just in time compiled or statically compiled) into an variety of different executable forms, including: 1) a form having only instructions of the class(es) supported by the target processor for execution; or 2) a form having alternative routines written using different combinations of the instructions of all classes and having control flow code that selects the routines to execute based on the instructions supported by the processor which is currently executing the code.

### Exemplary Specific Vector Friendly Instruction Format

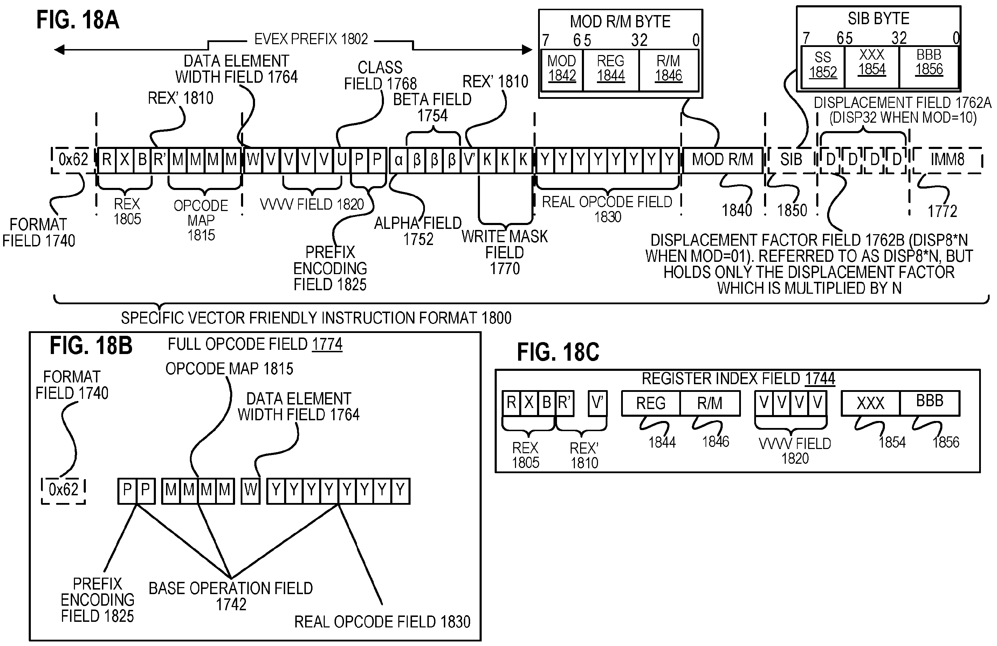

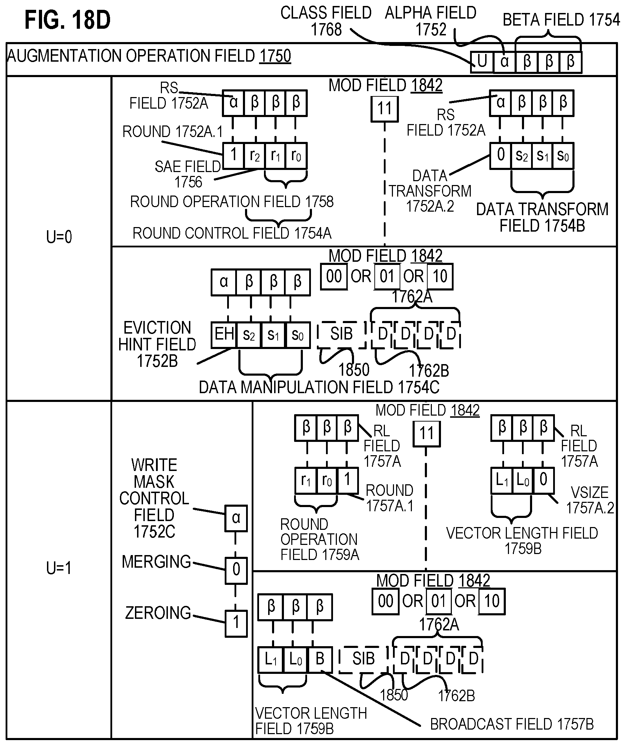

**Figure 18** is a block diagram illustrating an exemplary specific vector friendly instruction format according to embodiments of the disclosure. **Figure 18** shows a specific vector friendly instruction format 1800 that is specific in the sense that it specifies the location, size, interpretation, and order of the fields, as well as values for some of those fields. The specific vector friendly instruction format 1800 may be used to extend the x86 instruction set, and thus some of the fields are similar or the same as those used in the existing x86 instruction set and extension thereof (e.g., AVX). This format remains consistent with the prefix encoding field, real opcode byte field, MOD R/M field, SIB field, displacement field, and immediate fields of the existing x86 instruction set with extensions. The fields from **Figure 17** into which the fields from **Figure 18** map are illustrated.

It should be understood that, although embodiments of the disclosure are described with reference to the specific vector friendly instruction format 1800 in the context of the generic vector friendly instruction format 1700 for illustrative purposes, the disclosure is not limited to the specific vector friendly instruction format 1800 except where claimed. For example, the generic vector friendly instruction format 1700 contemplates a variety of possible sizes for the various fields, while the specific vector friendly instruction format 1800 is shown as having fields of specific sizes. By way of specific example, while the data element width field 1764 is illustrated as a one bit field in the specific vector friendly instruction format 1800, the disclosure is not so limited (that is, the generic vector friendly instruction format 1700 contemplates other sizes of the data element width field 1764).

The generic vector friendly instruction format 1700 includes the following fields listed below in the order illustrated in **Figure 18A****.**

EVEX Prefix (Bytes 0-3) 1802 - is encoded in a four-byte form.

Format Field 1740 (EVEX Byte 0, bits [7:0]) - the first byte (EVEX Byte 0) is the format field 1740 and it contains 0x62 (the unique value used for distinguishing the vector friendly instruction format in one embodiment of the disclosure).

The second-fourth bytes (EVEX Bytes 1-3) include a number of bit fields providing specific capability.

REX field 1805 (EVEX Byte 1, bits [7-5]) - consists of a EVEX.R bit field (EVEX Byte 1, bit [7] - R), EVEX.X bit field (EVEX byte 1, bit [6] - X), and 1757BEX byte 1, bit[5] - B). The EVEX.R, EVEX.X, and EVEX.B bit fields provide the same functionality as the corresponding VEX bit fields, and are encoded using 1s complement form, i.e. ZMM0 is encoded as 1111B, ZMM15 is encoded as 0000B. Other fields of the instructions encode the lower three bits of the register indexes as is known in the art (rrr, xxx, and bbb), so that Rrrr, Xxxx, and Bbbb may be formed by adding EVEX.R, EVEX.X, and EVEX.B.

REX' field 1710 - this is the first part of the REX' field 1710 and is the EVEX.R' bit field (EVEX Byte 1, bit [4] - R') that is used to encode either the upper 16 or lower 16 of the extended 32 register set. In one embodiment of the disclosure, this bit, along with others as indicated below, is stored in bit inverted format to distinguish (in the well-known x86 32-bit mode) from the BOUND instruction, whose real opcode byte is 62, but does not accept in the MOD R/M field (described below) the value of 11 in the MOD field; alternative embodiments of the disclosure do not store this and the other indicated bits below in the inverted format. A value of 1 is used to encode the lower 16 registers. In other words, R'Rrrr is formed by combining EVEX.R', EVEX.R, and the other RRR from other fields.

Opcode map field 1815 (EVEX byte 1, bits [3:0] - mmmm) - its content encodes an implied leading opcode byte (0F, 0F 38, or 0F 3).

Data element width field 1764 (EVEX byte 2, bit [7] - W) - is represented by the notation EVEX.W. EVEX.W is used to define the granularity (size) of the datatype (either 32-bit data elements or 64-bit data elements).

EVEX.vvvv 1820 (EVEX Byte 2, bits [6:3]-vvvv)- the role of EVEX.vvvv may include the following: 1) EVEX.vvvv encodes the first source register operand, specified in inverted (1s complement) form and is valid for instructions with 2 or more source operands; 2) EVEX.vvvv encodes the destination register operand, specified in 1s complement form for certain vector shifts; or 3) EVEX.vvvv does not encode any operand, the field is reserved and should contain 1111b. Thus, EVEX.vvvv field 1820 encodes the 4 low-order bits of the first source register specifier stored in inverted (1s complement) form. Depending on the instruction, an extra different EVEX bit field is used to extend the specifier size to 32 registers.

EVEX.U 1768 Class field (EVEX byte 2, bit [2]-U) - If EVEX.U = 0, it indicates class A or EVEX.U0; if EVEX.U = 1, it indicates class B or EVEX.U1.

Prefix encoding field 1825 (EVEX byte 2, bits [1:0]-pp) - provides additional bits for the base operation field. In addition to providing support for the legacy SSE instructions in the EVEX prefix format, this also has the benefit of compacting the SIMD prefix (rather than requiring a byte to express the SIMD prefix, the EVEX prefix requires only 2 bits). In one embodiment, to support legacy SSE instructions that use a SIMD prefix (66H, F2H, F3H) in both the legacy format and in the EVEX prefix format, these legacy SIMD prefixes are encoded into the SIMD prefix encoding field; and at runtime are expanded into the legacy SIMD prefix prior to being provided to the decoder's PLA (so the PLA can execute both the legacy and EVEX format of these legacy instructions without modification). Although newer instructions could use the EVEX prefix encoding field's content directly as an opcode extension, certain embodiments expand in a similar fashion for consistency but allow for different meanings to be specified by these legacy SIMD prefixes. An alternative embodiment may redesign the PLA to support the 2 bit SIMD prefix encodings, and thus not require the expansion.

Alpha field 1752 (EVEX byte 3, bit [7] - EH; also known as EVEX.EH, EVEX.rs, EVEX.RL, EVEX.write mask control, and EVEX.N; also illustrated with α) - as previously described, this field is context specific.

Beta field 1754 (EVEX byte 3, bits [6:4]-SSS, also known as EVEX.s₂₋₀, EVEX.r₂₋₀, EVEXrr1, EVEX.LL0, EVEX.LLB; also illustrated with βββ) - as previously described, this field is context specific.

REX' field 1710 - this is the remainder of the REX' field and is the EVEX.V' bit field (EVEX Byte 3, bit [3] - V') that may be used to encode either the upper 16 or lower 16 of the extended 32 register set. This bit is stored in bit inverted format. A value of 1 is used to encode the lower 16 registers. In other words, V'VVVV is formed by combining EVEX.V', EVEX.vvvv.

Write mask field 1770 (EVEX byte 3, bits [2:0]-kkk) - its content specifies the index of a register in the write mask registers as previously described. In one embodiment of the disclosure, the specific value EVEX.kkk=000 has a special behavior implying no write mask is used for the particular instruction (this may be implemented in a variety of ways including the use of a write mask hardwired to all ones or hardware that bypasses the masking hardware).

Real Opcode Field 1830 (Byte 4) is also known as the opcode byte. Part of the opcode is specified in this field.

MOD R/M Field 1840 (Byte 5) includes MOD field 1842, Reg field 1844, and R/M field 1846. As previously described, the MOD field's 1842 content distinguishes between memory access and non-memory access operations. The role of Reg field 1844 can be summarized to two situations: encoding either the destination register operand or a source register operand, or be treated as an opcode extension and not used to encode any instruction operand. The role of R/M field 1846 may include the following: encoding the instruction operand that references a memory address, or encoding either the destination register operand or a source register operand.

Scale, Index, Base (SIB) Byte (Byte 6) - As previously described, the scale field's 1750 content is used for memory address generation. SIB.xxx 1854 and SIB.bbb 1856 - the contents of these fields have been previously referred to with regard to the register indexes Xxxx and Bbbb.

Displacement field 1762A (Bytes 7-10) - when MOD field 1842 contains 10, bytes 7-10 are the displacement field 1762A, and it works the same as the legacy 32-bit displacement (disp32) and works at byte granularity.

Displacement factor field 1762B (Byte 7) - when MOD field 1842 contains 01, byte 7 is the displacement factor field 1762B. The location of this field is that same as that of the legacy x86 instruction set 8-bit displacement (disp8), which works at byte granularity. Since disp8 is sign extended, it can only address between -128 and 127 bytes offsets; in terms of 64 byte cache lines, disp8 uses 8 bits that can be set to only four really useful values -128, -64, 0, and 64; since a greater range is often needed, disp32 is used; however, disp32 requires 4 bytes. In contrast to disp8 and disp32, the displacement factor field 1762B is a reinterpretation of disp8; when using displacement factor field 1762B, the actual displacement is determined by the content of the displacement factor field multiplied by the size of the memory operand access (N). This type of displacement is referred to as disp8*N. This reduces the average instruction length (a single byte of used for the displacement but with a much greater range). Such compressed displacement is based on the assumption that the effective displacement is multiple of the granularity of the memory access, and hence, the redundant low-order bits of the address offset do not need to be encoded. In other words, the displacement factor field 1762B substitutes the legacy x86 instruction set 8-bit displacement. Thus, the displacement factor field 1762B is encoded the same way as an x86 instruction set 8-bit displacement (so no changes in the ModRM/SIB encoding rules) with the only exception that disp8 is overloaded to disp8*N. In other words, there are no changes in the encoding rules or encoding lengths but only in the interpretation of the displacement value by hardware (which needs to scale the displacement by the size of the memory operand to obtain a byte-wise address offset). Immediate field 1772 operates as previously described.

### Full Opcode Field

**Figure 18B** is a block diagram illustrating the fields of the specific vector friendly instruction format 1800 that make up the full opcode field 1774 according to one embodiment of the disclosure. Specifically, the full opcode field 1774 includes the format field 1740, the base operation field 1742, and the data element width (W) field 1764. The base operation field 1742 includes the prefix encoding field 1825, the opcode map field 1815, and the real opcode field 1830.

### Register Index Field

**Figure 18C** is a block diagram illustrating the fields of the specific vector friendly instruction format 1800 that make up the register index field 1744 according to one embodiment of the disclosure. Specifically, the register index field 1744 includes the REX field 1805, the REX' field 1810, the MODR/M.reg field 1844, the MODR/M.r/m field 1846, the VVVV field 1820, xxx field 1854, and the bbb field 1856.

### Augmentation Operation Field

**Figure 18D** is a block diagram illustrating the fields of the specific vector friendly instruction format 1800 that make up the augmentation operation field 1750 according to one embodiment of the disclosure. When the class (U) field 1768 contains 0, it signifies EVEX.U0 (class A 1768A); when it contains 1, it signifies EVEX.U1 (class B 1768B). When U=0 and the MOD field 1842 contains 11 (signifying a no memory access operation), the alpha field 1752 (EVEX byte 3, bit [7] - EH) is interpreted as the rs field 1752A. When the rs field 1752A contains a 1 (round 1752A.1), the beta field 1754 (EVEX byte 3, bits [6:4]- SSS) is interpreted as the round control field 1754A. The round control field 1754A includes a one bit SAE field 1756 and a two bit round operation field 1758. When the rs field 1752A contains a 0 (data transform 1752A.2), the beta field 1754 (EVEX byte 3, bits [6:4]- SSS) is interpreted as a three bit data transform field 1754B. When U=0 and the MOD field 1842 contains 00, 01, or 10 (signifying a memory access operation), the alpha field 1752 (EVEX byte 3, bit [7] - EH) is interpreted as the eviction hint (EH) field 1752B and the beta field 1754 (EVEX byte 3, bits [6:4]- SSS) is interpreted as a three bit data manipulation field 1754C.

When U=1, the alpha field 1752 (EVEX byte 3, bit [7] - EH) is interpreted as the write mask control (Z) field 1752C. When U=1 and the MOD field 1842 contains 11 (signifying a no memory access operation), part of the beta field 1754 (EVEX byte 3, bit [4]- S₀) is interpreted as the RL field 1757A; when it contains a 1 (round 1757A.1) the rest of the beta field 1754 (EVEX byte 3, bit [6-5]- S₂₋₁) is interpreted as the round operation field 1759A, while when the RL field 1757A contains a 0 (VSIZE 1757.A2) the rest of the beta field 1754 (EVEX byte 3, bit [6-5]- S₂₋₁) is interpreted as the vector length field 1759B (EVEX byte 3, bit [6-5]- L₁₋₀). When U=1 and the MOD field 1842 contains 00, 01, or 10 (signifying a memory access operation), the beta field 1754 (EVEX byte 3, bits [6:4]- SSS) is interpreted as the vector length field 1759B (EVEX byte 3, bit [6-5]- L₁₋₀) and the broadcast field 1757B (EVEX byte 3, bit [4]-B).

### Exemplary Register Architecture

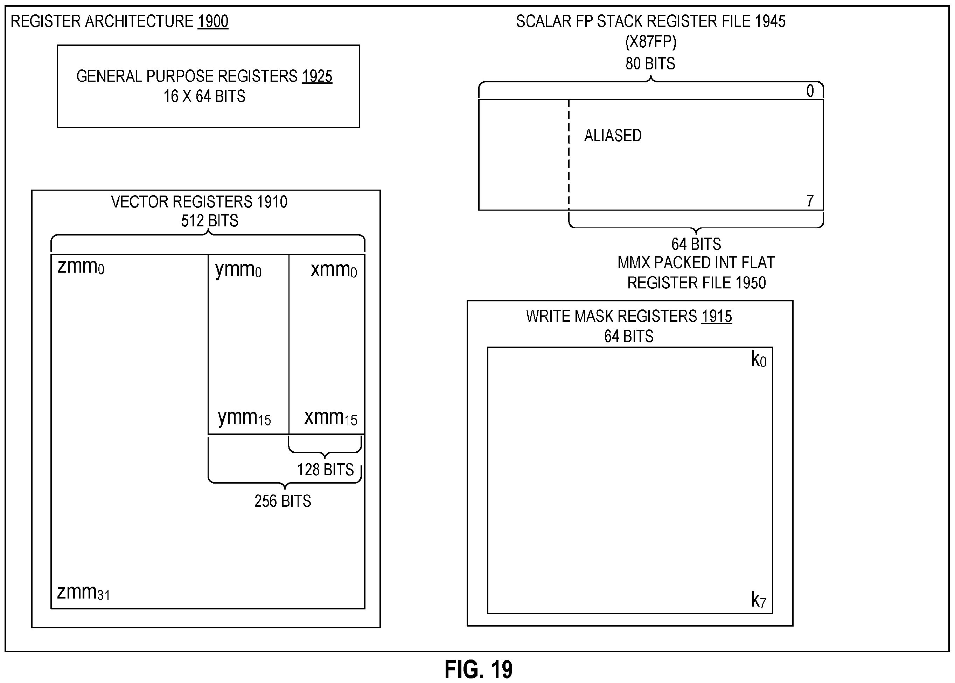

**Figure 19** is a block diagram of a register architecture 1900 according to one embodiment of the disclosure. In the embodiment illustrated, there are 32 vector registers 1910 that are 512 bits wide; these registers are referenced as zmm0 through zmm31. The lower order 256 bits of the lower 16 zmm registers are overlaid on registers ymm0-16. The lower order 128 bits of the lower 16 zmm registers (the lower order 128 bits of the ymm registers) are overlaid on registers xmm0-15. The specific vector friendly instruction format 1800 operates on these overlaid register file as illustrated in the below tables.

| Adjustable Vector Length | Class | Operations | Registers |
|---|---|---|---|
| Instruction Templates that do not include the vector length field 1759B | A (Figure 17A; U=0) | 1710, 1715, 1725, 1730 | zmm registers (the vector length is 64 byte) |
| | B (Figure 17B; U=1) | 1712 | zmm registers (the vector length is 64 byte) |
| Instruction templates that do include the vector length field 1759B | B (Figure 17B; U=1) | 1717, 1727 | zmm, ymm, or xmm registers (the vector length is 64 byte, 32 byte, or 16 byte) depending on the vector length field 1759B |

In other words, the vector length field 1759B selects between a maximum length and one or more other shorter lengths, where each such shorter length is half the length of the preceding length; and instructions templates without the vector length field 1759B operate on the maximum vector length. Further, in one embodiment, the class B instruction templates of the specific vector friendly instruction format 1800 operate on packed or scalar single/double-precision floating point data and packed or scalar integer data. Scalar operations are operations performed on the lowest order data element position in an zmm/ymm/xmm register; the higher order data element positions are either left the same as they were prior to the instruction or zeroed depending on the embodiment.

Write mask registers 1915 - in the embodiment illustrated, there are 8 write mask registers (k0 through k7), each 64 bits in size. In an alternate embodiment, the write mask registers 1915 are 16 bits in size. As previously described, in one embodiment of the disclosure, the vector mask register k0 cannot be used as a write mask; when the encoding that would normally indicate k0 is used for a write mask, it selects a hardwired write mask of 0xFFFF, effectively disabling write masking for that instruction.

General-purpose registers 1925 - in the embodiment illustrated, there are sixteen 64-bit general-purpose registers that are used along with the existing x86 addressing modes to address memory operands. These registers are referenced by the names RAX, RBX, RCX, RDX, RBP, RSI, RDI, RSP, and R8 through R15.

Scalar floating point stack register file (x87 stack) 1945, on which is aliased the MMX packed integer flat register file 1950 - in the embodiment illustrated, the x87 stack is an eight-element stack used to perform scalar floating-point operations on 32/64/80-bit floating point data using the x87 instruction set extension; while the MMX registers are used to perform operations on 64-bit packed integer data, as well as to hold operands for some operations performed between the MMX and XMM registers.

Alternative embodiments of the disclosure may use wider or narrower registers. Additionally, alternative embodiments of the disclosure may use more, less, or different register files and registers.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

### Exemplary Core Architectures

### In-order and out-of-order core block diagram

**Figure 2A** discussed above is a block diagram illustrating both an exemplary in-order pipeline and an exemplary register renaming, out-of-order issue/execution pipeline according to embodiments of the disclosure. Figure 2B discussed above is a block diagram illustrating both an exemplary embodiment of an in-order architecture core and an exemplary register renaming, out-of-order issue/execution architecture core to be included in a processor according to embodiments of the disclosure. The solid lined boxes in **Figures 2A-B** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

### Specific Exemplary In-Order Core Architecture

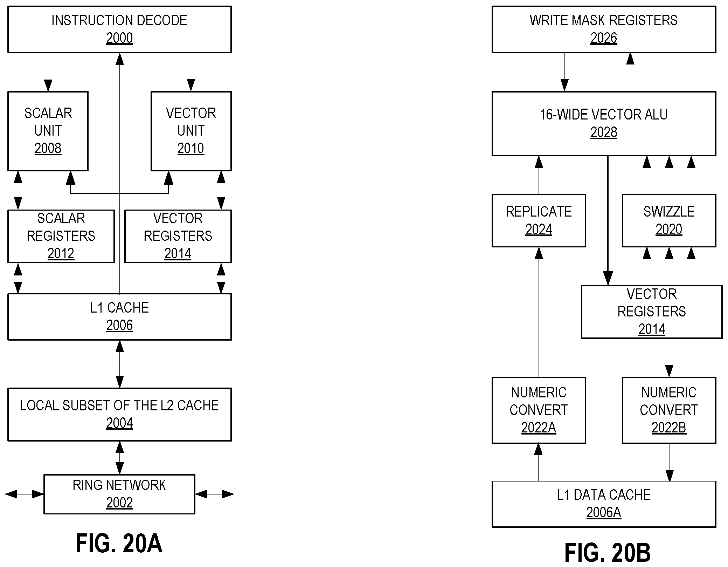

**Figures 20A-B** illustrate a block diagram of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

**Figure 20A** is a block diagram of a single processor core, along with its connection to the on-die interconnect network 2002 and with its local subset of the Level 2 (L2) cache 2004, according to embodiments of the disclosure. In one embodiment, an instruction decode unit 2000 supports the x86 instruction set with a packed data instruction set extension. An L1 cache 2006 allows low-latency accesses to cache memory into the scalar and vector units. While in one embodiment (to simplify the design), a scalar unit 2008 and a vector unit 2010 use separate register sets (respectively, scalar registers 2012 and vector registers 2014) and data transferred between them is written to memory and then read back in from a level 1 (L1) cache 2006, alternative embodiments of the disclosure may use a different approach (e.g., use a single register set or include a communication path that allow data to be transferred between the two register files without being written and read back).

The local subset of the L2 cache 2004 is part of a global L2 cache that is divided into separate local subsets, one per processor core. Each processor core has a direct access path to its own local subset of the L2 cache 2004. Data read by a processor core is stored in its L2 cache subset 2004 and can be accessed quickly, in parallel with other processor cores accessing their own local L2 cache subsets. Data written by a processor core is stored in its own L2 cache subset 2004 and is flushed from other subsets, if necessary. The ring network ensures coherency for shared data. The ring network is bi-directional to allow agents such as processor cores, L2 caches and other logic blocks to communicate with each other within the chip. Each ring data-path is 1012-bits wide per direction.

**Figure 20B** is an expanded view of part of the processor core in **Figure 20A** according to embodiments of the disclosure. **Figure 20B** includes an L1 data cache 2006A part of the L1 cache 2004, as well as more detail regarding the vector unit 2010 and the vector registers 2014. Specifically, the vector unit 2010 is a 16-wide vector processing unit (VPU) (see the 16-wide ALU 2028), which executes one or more of integer, single-precision float, and double-precision float instructions. The VPU supports swizzling the register inputs with swizzle unit 2020, numeric conversion with numeric convert units 2022A-B, and replication with replication unit 2024 on the memory input. Write mask registers 2026 allow predicating resulting vector writes.

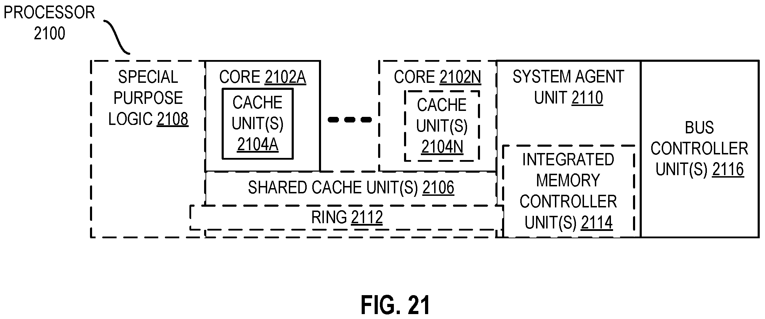

**Figure 21** is a block diagram of a processor 2100 that may have more than one core, may have an integrated memory controller, and may have integrated graphics according to embodiments of the disclosure. The solid lined boxes in **Figure 21** illustrate a processor 2100 with a single core 2102A, a system agent 2110, a set of one or more bus controller units 2116, while the optional addition of the dashed lined boxes illustrates an alternative processor 2100 with multiple cores 2102A-N, a set of one or more integrated memory controller unit(s) 2114 in the system agent unit 2110, and special purpose logic 2108.

Thus, different implementations of the processor 2100 may include: 1) a CPU with the special purpose logic 2108 being integrated graphics and/or scientific (throughput) logic (which may include one or more cores), and the cores 2102A-N being one or more general purpose cores (e.g., general purpose in-order cores, general purpose out-of-order cores, a combination of the two); 2) a coprocessor with the cores 2102A-N being a large number of special purpose cores intended primarily for graphics and/or scientific (throughput); and 3) a coprocessor with the cores 2102A-N being a large number of general purpose in-order cores. Thus, the processor 2100 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 2100 may be a part of and/or may be implemented on one or more substrates using any of a number of process technologies, such as, for example, BiCMOS, CMOS, or NMOS.

The memory hierarchy includes one or more levels of cache within the cores, a set or one or more shared cache units 2106, and external memory (not shown) coupled to the set of integrated memory controller units 2114. The set of shared cache units 2106 may include one or more mid-level caches, such as level 2 (L2), level 3 (L3), level 4 (L4), or other levels of cache, a last level cache (LLC), and/or combinations thereof. While in one embodiment a ring based interconnect unit 2112 interconnects the integrated graphics logic 2108, the set of shared cache units 2106, and the system agent unit 2110/integrated memory controller unit(s) 2114, alternative embodiments may use any number of well-known techniques for interconnecting such units. In one embodiment, coherency is maintained between one or more cache units 2106 and cores 2102-A-N.

In some embodiments, one or more of the cores 2102A-N are capable of multi-threading. The system agent 2110 includes those components coordinating and operating cores 2102A-N. The system agent unit 2110 may include for example a power control unit (PCU) and a display unit. The PCU may be or include logic and components needed for regulating the power state of the cores 2102A-N and the integrated graphics logic 2108. The display unit is for driving one or more externally connected displays.

The cores 2102A-N may be homogenous or heterogeneous in terms of architecture instruction set; that is, two or more of the cores 2102A-N may be capable of execution the same instruction set, while others may be capable of executing only a subset of that instruction set or a different instruction set.

### Exemplary Computer Architectures

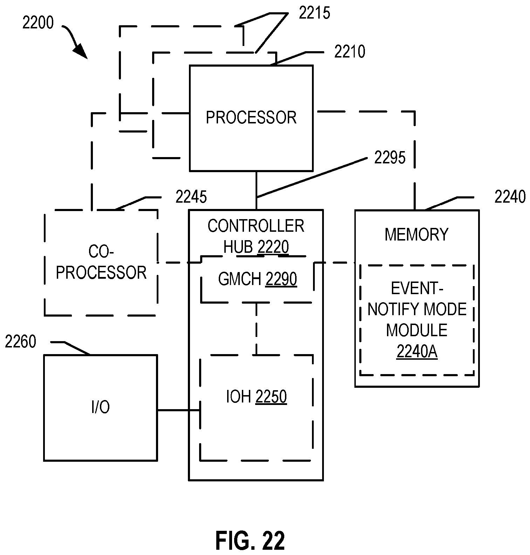

**Figures 22-25** are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to **Figure 22****,** shown is a block diagram of a system 2200 in accordance with one embodiment of the present disclosure. The system 2200 may include one or more processors 2210, 2215, which are coupled to a controller hub 2220. In one embodiment the controller hub 2220 includes a graphics memory controller hub (GMCH) 2290 and an Input/Output Hub (IOH) 2250 (which may be on separate chips); the GMCH 2290 includes memory and graphics controllers to which are coupled memory 2240 and a coprocessor 2245; the IOH 2250 is couples input/output (I/O) devices 2260 to the GMCH 2290. Alternatively, one or both of the memory and graphics controllers are integrated within the processor (as described herein), the memory 2240 and the coprocessor 2245 are coupled directly to the processor 2210, and the controller hub 2220 in a single chip with the IOH 2250. Memory 2240 may include an event-notify mode module 2240A, for example, to store code that when executed causes a processor to perform any method of this disclosure.

The optional nature of additional processors 2215 is denoted in **Figure 22** with broken lines. Each processor 2210, 2215 may include one or more of the processing cores described herein and may be some version of the processor 2100.

The memory 2240 may be, for example, dynamic random access memory (DRAM), phase change memory (PCM), or a combination of the two. For at least one embodiment, the controller hub 2220 communicates with the processor(s) 2210, 2215 via a multi-drop bus, such as a frontside bus (FSB), point-to-point interface such as Quickpath Interconnect (QPI), or similar connection 2295.

In one embodiment, the coprocessor 2245 is a special-purpose processor, such as, for example, a high-throughput MIC processor, a network or communication processor, compression engine, graphics processor, GPGPU, embedded processor, or the like. In one embodiment, controller hub 2220 may include an integrated graphics accelerator.

There can be a variety of differences between the physical resources 2210, 2215 in terms of a spectrum of metrics of merit including architectural, microarchitectural, thermal, power consumption characteristics, and the like.

In one embodiment, the processor 2210 executes instructions that control data processing operations of a general type. Embedded within the instructions may be coprocessor instructions. The processor 2210 recognizes these coprocessor instructions as being of a type that should be executed by the attached coprocessor 2245. Accordingly, the processor 2210 issues these coprocessor instructions (or control signals representing coprocessor instructions) on a coprocessor bus or other interconnect, to coprocessor 2245. Coprocessor(s) 2245 accept and execute the received coprocessor instructions.

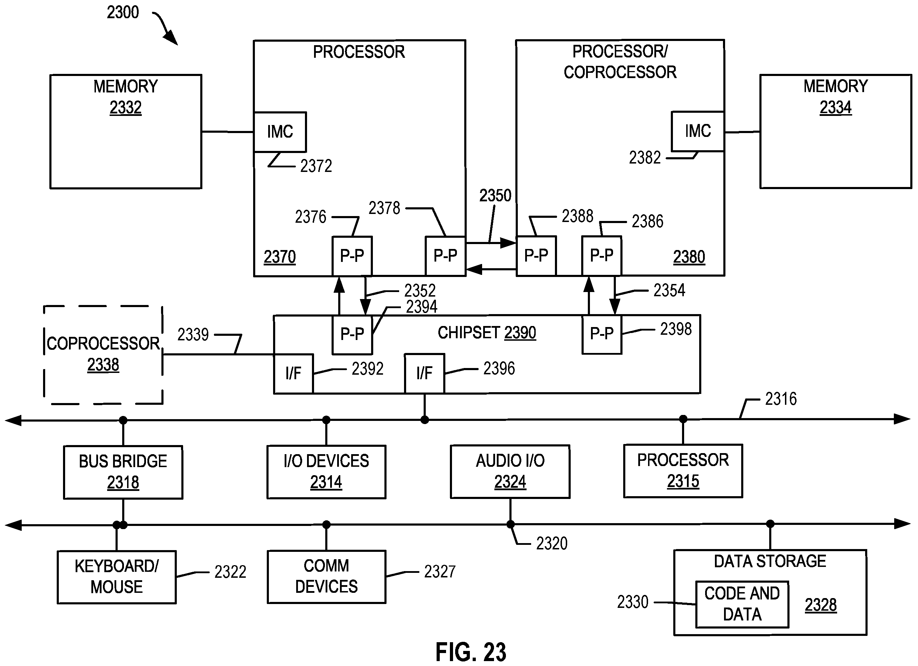

Referring now to **Figure 23****,** shown is a block diagram of a first more specific exemplary system 2300 in accordance with an embodiment of the present disclosure. As shown in **Figure 23****,** multiprocessor system 2300 is a point-to-point interconnect system, and includes a first processor 2370 and a second processor 2380 coupled via a point-to-point interconnect 2350. Each of processors 2370 and 2380 may be some version of the processor 2100. In one embodiment of the disclosure, processors 2370 and 2380 are respectively processors 2210 and 2215, while coprocessor 2338 is coprocessor 2245. In another embodiment, processors 2370 and 2380 are respectively processor 2210 coprocessor 2245.

Processors 2370 and 2380 are shown including integrated memory controller (IMC) units 2372 and 2382, respectively. Processor 2370 also includes as part of its bus controller units point-to-point (P-P) interfaces 2376 and 2378; similarly, second processor 2380 includes P-P interfaces 2386 and 2388. Processors 2370, 2380 may exchange information via a point-to-point (P-P) interface 2350 using P-P interface circuits 2378, 2388. As shown in **Figure 23****,** IMCs 2372 and 2382 couple the processors to respective memories, namely a memory 2332 and a memory 2334, which may be portions of main memory locally attached to the respective processors.

Processors 2370, 2380 may each exchange information with a chipset 2390 via individual P-P interfaces 2352, 2354 using point to point interface circuits 2376, 2394, 2386, 2398. Chipset 2390 may optionally exchange information with the coprocessor 2338 via a high-performance interface 2339. In one embodiment, the coprocessor 2338 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 2390 may be coupled to a first bus 2316 via an interface 2396. In one embodiment, first bus 2316 may be a Peripheral Component Interconnect (PCI) bus, or a bus such as a PCI Express bus or another third generation I/O interconnect bus, although the scope of the present disclosure is not so limited.

As shown in **Figure 23****,** various I/O devices 2314 may be coupled to first bus 2316, along with a bus bridge 2318 which couples first bus 2316 to a second bus 2320. In one embodiment, one or more additional processor(s) 2315, such as coprocessors, high-throughput MIC processors, GPGPU's, accelerators (such as, e.g., graphics accelerators or digital signal processing (DSP) units), field programmable gate arrays, or any other processor, are coupled to first bus 2316. In one embodiment, second bus 2320 may be a low pin count (LPC) bus. Various devices may be coupled to a second bus 2320 including, for example, a keyboard and/or mouse 2322, communication devices 2327 and a storage unit 2328 such as a disk drive or other mass storage device which may include instructions/code and data 2330, in one embodiment. Further, an audio I/O 2324 may be coupled to the second bus 2320. Note that other architectures are possible. For example, instead of the point-to-point architecture of **Figure 23****,** a system may implement a multi-drop bus or other such architecture.

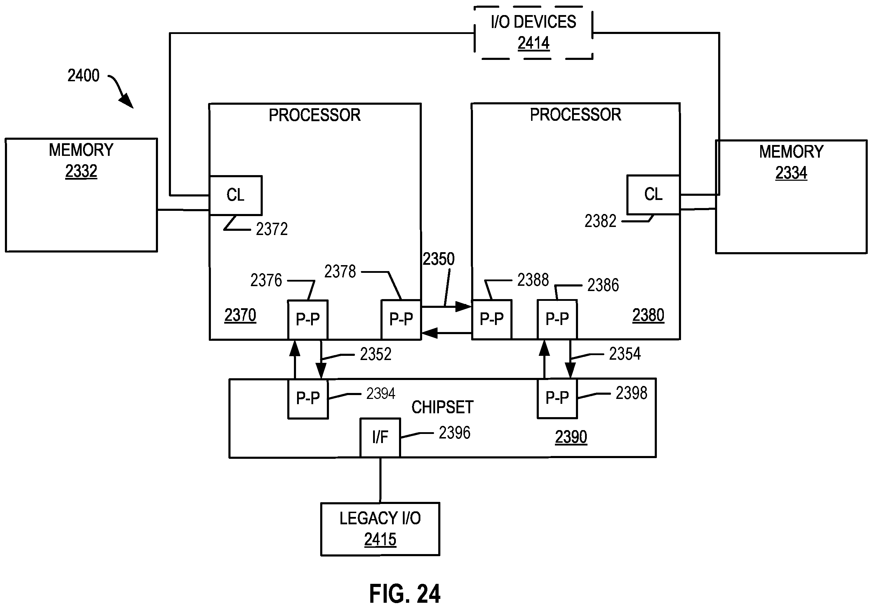

Referring now to **Figure 24****,** shown is a block diagram of a second more specific exemplary system 2400 in accordance with an embodiment of the present disclosure. Like elements in **Figures 23** **and** **24** bear like reference numerals, and certain aspects of **Figure 23** have been omitted from **Figure 24** in order to avoid obscuring other aspects of **Figure 24****.**

**Figure 24** illustrates that the processors 2370, 2380 may include integrated memory and I/O control logic ("CL") 2372 and 2382, respectively. Thus, the CL 2372, 2382 include integrated memory controller units and include I/O control logic. **Figure 24** illustrates that not only are the memories 2332, 2334 coupled to the CL 2372, 2382, but also that I/O devices 2414 are also coupled to the control logic 2372, 2382. Legacy I/O devices 2415 are coupled to the chipset 2390.

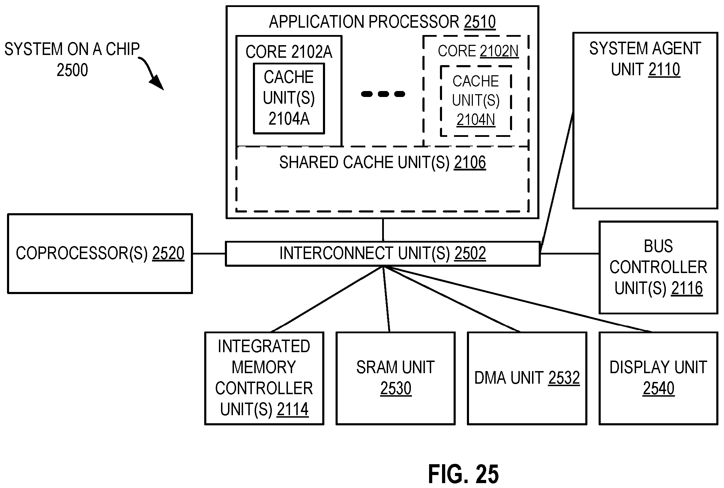

Referring now to **Figure 25****,** shown is a block diagram of a SoC 2500 in accordance with an embodiment of the present disclosure. Similar elements in **Figure 21** bear like reference numerals. Also, dashed lined boxes are optional features on more advanced SoCs. In **Figure 25****,** an interconnect unit(s) 2502 is coupled to: an application processor 2510 which includes a set of one or more cores 202A-N and shared cache unit(s) 2106; a system agent unit 2110; a bus controller unit(s) 2116; an integrated memory controller unit(s) 2114; a set or one or more coprocessors 2520 which may include integrated graphics logic, an image processor, an audio processor, and a video processor; an static random access memory (SRAM) unit 2530; a direct memory access (DMA) unit 2532; and a display unit 2540 for coupling to one or more external displays. In one embodiment, the coprocessor(s) 2520 include a special-purpose processor, such as, for example, a network or communication processor, compression engine, GPGPU, a high-throughput MIC processor, embedded processor, or the like.

Embodiments (e.g., of the mechanisms) disclosed herein may be implemented in hardware, software, firmware, or a combination of such implementation approaches. Embodiments of the disclosure may be implemented as computer programs or program code executing on programmable systems comprising at least one processor, a storage system (including volatile and non-volatile memory and/or storage elements), at least one input device, and at least one output device.

Program code, such as code 2330 illustrated in **Figure 23****,** may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the disclosure also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

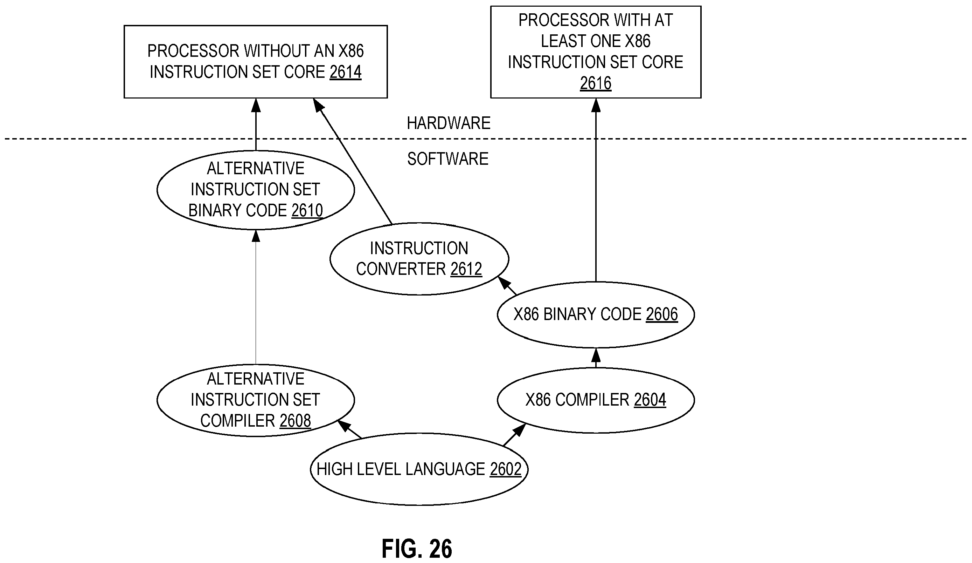

**Figure 26** is a block diagram contrasting the use of a software instruction converter to convert binary instructions in a source instruction set to binary instructions in a target instruction set according to embodiments of the disclosure. In the illustrated embodiment, the instruction converter is a software instruction converter, although alternatively the instruction converter may be implemented in software, firmware, hardware, or various combinations thereof. **Figure 26** shows a program in a high level language 2602 may be compiled using an x86 compiler 2604 to generate x86 binary code 2606 that may be natively executed by a processor with at least one x86 instruction set core 2616. The processor with at least one x86 instruction set core 2616 represents any processor that can perform substantially the same functions as an Intel^{®} processor with at least one x86 instruction set core by compatibly executing or otherwise processing (1) a substantial portion of the instruction set of the Intel^{®} x86 instruction set core or (2) object code versions of applications or other software targeted to run on an Intel^{®} processor with at least one x86 instruction set core, in order to achieve substantially the same result as an Intel^{®} processor with at least one x86 instruction set core. The x86 compiler 2604 represents a compiler that is operable to generate x86 binary code 2606 (e.g., object code) that can, with or without additional linkage processing, be executed on the processor with at least one x86 instruction set core 2616. Similarly, **Figure 26** shows the program in the high level language 2602 may be compiled using an alternative instruction set compiler 2608 to generate alternative instruction set binary code 2610 that may be natively executed by a processor without at least one x86 instruction set core 2614 (e.g., a processor with cores that execute the MIPS instruction set of MIPS Technologies of Sunnyvale, CA and/or that execute the ARM instruction set of ARM Holdings of Sunnyvale, CA). The instruction converter 2612 is used to convert the x86 binary code 2606 into code that may be natively executed by the processor without an x86 instruction set core 2614. This converted code is not likely to be the same as the alternative instruction set binary code 2610 because an instruction converter capable of this is difficult to make; however, the converted code will accomplish the general operation and be made up of instructions from the alternative instruction set. Thus, the instruction converter 2612 represents software, firmware, hardware, or a combination thereof that, through emulation, simulation or any other process, allows a processor or other electronic device that does not have an x86 instruction set processor or core to execute the x86 binary code 2606.

In the foregoing specification, the embodiments of invention have been described with reference to specific exemplary embodiments thereof. The specification and drawings are, accordingly, to be regarded in an illustrative rather than a restrictive sense.

Flow diagrams as illustrated herein provide examples of sequences of various process actions. The flow diagrams can indicate operations to be executed by a software or firmware routine, as well as physical operations. In one embodiment, a flow diagram can illustrate the state of a finite state machine (FSM), which can be implemented in hardware and/or software. Although shown in a particular sequence or order, unless otherwise specified, the order of the actions can be modified. Thus, the illustrated embodiments should be understood only as an example, and the process can be performed in a different order, and some actions can be performed in parallel. Additionally, one or more actions can be omitted in various embodiments; thus, not all actions are required in every embodiment. Other process flows are possible.

Embodiments of the invention may include various steps, which have been described above. The steps may be embodied in machine-executable instructions which may be used to cause a general-purpose or special-purpose processor to perform the steps. Alternatively, these steps may be performed by specific hardware components that contain hardwired logic for performing the steps, or by any combination of programmed computer components and custom hardware components.

As described herein, instructions may refer to specific configurations of hardware such as application specific integrated circuits (ASICs) configured to perform certain operations or having a predetermined functionality or software instructions stored in memory embodied in a non-transitory computer readable medium. Thus, the techniques shown in the Figures can be implemented using code and data stored and executed on one or more electronic devices (e.g., an end station, a network element, etc.). Such electronic devices store and communicate (internally and/or with other electronic devices over a network) code and data using computer machine-readable media, such as non-transitory computer machine-readable storage media (e.g., magnetic disks; optical disks; random access memory; read only memory; flash memory devices; phase-change memory) and transitory computer machine-readable communication media (e.g., electrical, optical, acoustical or other form of propagated signals - such as carrier waves, infrared signals, digital signals, etc.). In addition, such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device. Of course, one or more parts of an embodiment of the invention may be implemented using different combinations of software, firmware, and/or hardware. Throughout this detailed description, for the purposes of explanation, numerous specific details were set forth in order to provide a thorough understanding of the present invention. It will be apparent, however, to one skilled in the art that the invention may be practiced without some of these specific details. In certain instances, well known structures and functions were not described in elaborate detail in order to avoid obscuring the subject matter of the present invention. The invention is defined by the appended claims.

## Claims

1. A processor comprising:
a decoder (1446) to decode an instruction into a decoded instruction, the instruction comprising a first field that indicates an instruction pointer to a user-level event handler; and
an execution unit (1454) to execute the decoded instruction to, after a swap of an instruction pointer that indicates where an event occurred from a current instruction pointer register (1416) into a user-level event handler pointer register (1414), push the instruction pointer that indicates where the event occurred onto call stack storage (1444), and change a current instruction pointer in the current instruction pointer register (1416) to the instruction pointer to the user-level event handler.

2. The processor of claim 1, wherein the instruction further comprises a second field that indicates a number of bits by which to change a stack pointer to the call stack storage (1444), and the execution unit (1454) is to execute the decoded instruction to also change the stack pointer by the number of bits.

3. The processor of any one of claims 1-2, wherein the execution unit (1454) is to execute the decoded instruction to also change a stack pointer to the call stack storage (1444) to protect a stack red zone from being overwritten by the instruction pointer that indicates where the event occurred.

4. The processor of any one of claims 1-3, wherein the execution unit (1454) is to execute the decoded instruction only when the processor is not in an event-notify mode.

5. The processor of claim 4, wherein the event-notify mode is set in an event-notify status register.

6. The processor of any one of claims 1-5, wherein the execution unit (1454) is to execute the decoded instruction to also, after the swap of the instruction pointer that indicates where the event occurred from the current instruction pointer register (1416) into the user-level event handler pointer register (1414), push the instruction pointer that indicates where the event occurred onto shadow stack storage (1445).

7. The processor of claim 6, wherein the shadow stack storage (1445) is not user-level writable.

8. The processor of claim 6, wherein, on completion of execution of the user-level event handler, the processor is to pull a first instruction pointer from the call stack storage (1444) and a second instruction pointer from the shadow stack storage (1445), and execute starting from the first instruction pointer only when the first instruction pointer and the second instruction pointer match.

9. A method comprising:
decoding an instruction into a decoded instruction with a decoder (1446) of a processor, the instruction comprising a first field that indicates an instruction pointer to a user-level event handler; and
executing the decoded instruction with an execution unit (1454) of the processor to, after a swap of an instruction pointer that indicates where an event occurred from a current instruction pointer register (1416) into a user-level event handler pointer register (1414), push the instruction pointer that indicates where the event occurred onto call stack storage (1444), and change a current instruction pointer in the current instruction pointer register (1416) to the instruction pointer to the user-level event handler.

10. The method of claim 9, wherein the instruction further comprises a second field that indicates a number of bits by which to change a stack pointer to the call stack storage (1444), and the executing the decoded instruction with the execution unit (1454) is to also change the stack pointer by the number of bits.

11. The method of any one of claims 9-10, wherein the executing the decoded instruction with the execution unit (1454) is also to change a stack pointer to the call stack storage (1444) to protect a stack red zone from being overwritten by the instruction pointer that indicates where the event occurred.

12. The method of any one of claims 9-11, wherein the executing the decoded instruction with the execution unit (1454) is only when the processor is not in an event-notify mode.

13. The method of claim 12, further comprising setting the event-notify mode in an event-notify status register of the processor.

14. The method of any one of claims 9-13, wherein the executing the decoded instruction with the execution unit (1454) is also to, after the swap of the instruction pointer that indicates where the event occurred from the current instruction pointer register (1416) into the user-level event handler pointer register (1414), push the instruction pointer that indicates where the event occurred onto shadow stack storage (1445).

15. The method of claim 14, further comprising, on completion of execution of the user-level event handler, pulling, by the processor, a first instruction pointer from the call stack storage (1444) and a second instruction pointer from the shadow stack storage (1445), and executing starting from the first instruction pointer only when the first instruction pointer and the second instruction pointer match.

## Patentansprüche

1. Prozessor, umfassend:
einen Decodierer (1446), um eine Anweisung in eine decodierte Anweisung zu decodieren, wobei die Anweisung ein erstes Feld umfasst, das einen Anweisungszeiger auf einen Ereignisbehandler auf Benutzerebene angibt; und
eine Ausführungseinheit (1454), um die decodierte Anweisung auszuführen, um nach einem Austausch eines Anweisungszeigers, der angibt, wo ein Ereignis von einem aktuellen Anweisungszeigerregister (1416) in ein Ereignisbehandler-Zeigerregister (1414) auf Benutzerebene aufgetreten ist, den Anweisungszeiger, der angibt, wo das Ereignis aufgetreten ist, auf den Aufrufstapelspeicher (1444) zu schieben und einen aktuellen Anweisungszeiger in dem aktuellen Anweisungszeigerregister (1416) zu dem Anweisungszeiger zu dem Ereignisbehandler auf Benutzerebene zu ändern.

2. Prozessor nach Anspruch 1, wobei die Anweisung ferner ein zweites Feld umfasst, das eine Anzahl von Bits angibt, um die ein Stapelzeiger zu dem Aufrufstapelspeicher (1444) geändert werden soll, und die Ausführungseinheit (1454) die decodierte Anweisung ausführen soll, um auch den Stapelzeiger um die Anzahl von Bits zu ändern.

3. Prozessor nach einem der Ansprüche 1-2, wobei die Ausführungseinheit (1454) die decodierte Anweisung ausführen soll, um auch einen Stapelzeiger zu dem Aufrufstapelspeicher (1444) zu ändern, um eine Stapelrotzone vor dem Überschreiben durch den Anweisungszeiger zu schützen, der angibt, wo das Ereignis aufgetreten ist.

4. Prozessor nach einem der Ansprüche 1-3, wobei die Ausführungseinheit (1454) die decodierte Anweisung nur ausführen soll, wenn sich der Prozessor nicht in einem Ereignisbenachrichtigungsmodus befindet.

5. Prozessor nach Anspruch 4, wobei der Ereignisbenachrichtigungsmodus in ein Ereignisbenachrichtigungsstatusregister gesetzt ist.

6. Prozessor nach einem der Ansprüche 1-5, wobei die Ausführungseinheit (1454) die decodierte Anweisung ausführen soll, um auch nach dem Austauschen des Anweisungszeigers, der angibt, wo das Ereignis von dem aktuellen Anweisungszeigerregister (1416) in das Ereignisbehandler-Zeigerregister (1414) auf Benutzerebene aufgetreten ist, den Anweisungszeiger, der angibt, wo das Ereignis aufgetreten ist, in den Schattenstapelspeicher (1445) zu schieben.

7. Prozessor nach Anspruch 6, wobei der Schattenstapelspeicher (1445) auf Benutzerebene nicht beschreibbar ist.

8. Prozessor nach Anspruch 6, wobei der Prozessor nach Abschluss der Ausführung des Ereignisbehandlers auf Benutzerebene einen ersten Anweisungszeiger aus dem Aufrufstapelspeicher (1444) und einen zweiten Anweisungszeiger aus dem Schattenstapelspeicher (1445) ziehen soll und ab dem ersten Anweisungszeiger nur dann ausführen soll, wenn der erste Anweisungszeiger und der zweite Anweisungszeiger übereinstimmen.

9. Verfahren, umfassend:
Decodieren einer Anweisung in eine decodierte Anweisung mit einem Decodierer (1446) eines Prozessors, wobei die Anweisung ein erstes Feld umfasst, das einen Anweisungszeiger auf einen Ereignisbehandler auf Benutzerebene angibt; und
Ausführen der decodierten Anweisung mit einer Ausführungseinheit (1454) des Prozessors, um nach einem Austausch eines Anweisungszeigers, der angibt, wo ein Ereignis von einem aktuellen Anweisungszeigerregister (1416) in ein Ereignisbehandler-Zeigerregister (1414) auf Benutzerebene aufgetreten ist, den Anweisungszeiger, der angibt, wo das Ereignis aufgetreten ist, auf den Aufrufstapelspeicher (1444) zu schieben und einen aktuellen Anweisungszeiger in dem aktuellen Anweisungszeigerregister (1416) zu dem Anweisungszeiger zu dem Ereignisbehandler auf Benutzerebene zu ändern.

10. Verfahren nach Anspruch 9, wobei die Anweisung ferner ein zweites Feld umfasst, das eine Anzahl von Bits angibt, um die ein Stapelzeiger zu dem Aufrufstapelspeicher (1444) geändert werden soll, und das Ausführen der decodierten Anweisung mit der Ausführungseinheit (1454) auch den Stapelzeiger um die Anzahl von Bits ändern soll.

11. Verfahren nach einem der Ansprüche 9-10, wobei das Ausführen der decodierten Anweisung mit der Ausführungseinheit (1454) auch dazu dient, einen Stapelzeiger zu dem Aufrufstapelspeicher (1444) zu ändern, um eine Stapelrotzone vor dem Überschreiben durch den Anweisungszeiger zu schützen, der angibt, wo das Ereignis aufgetreten ist.

12. Verfahren nach einem der Ansprüche 9-11, wobei das Ausführen der decodierten Anweisung mit der Ausführungseinheit (1454) nur dann erfolgt, wenn sich der Prozessor nicht in einem Ereignisbenachrichtigungsmodus befindet.

13. Verfahren nach Anspruch 12, ferner umfassend Setzen des Ereignisbenachrichtigungsmodus in ein Ereignisbenachrichtigungsstatusregister des Prozessors.

14. Verfahren nach einem der Ansprüche 9-13, wobei das Ausführen der decodierten Anweisung mit der Ausführungseinheit (1454) auch dazu dient, nach dem Austauschen des Anweisungszeigers, der angibt, wo das Ereignis von dem aktuellen Anweisungszeigerregister (1416) in das Ereignisbehandler-Zeigerregister (1414) auf Benutzerebene aufgetreten ist, den Anweisungszeiger, der angibt, wo das Ereignis aufgetreten ist, in den Schattenstapelspeicher (1445) zu schieben.

15. Verfahren nach Anspruch 14, ferner umfassend, nach Abschluss der Ausführung des Ereignisbehandlers auf Benutzerebene, Ziehen, durch den Prozessor, eines ersten Anweisungszeigers aus dem Aufrufstapelspeicher (1444) und eines zweiten Anweisungszeigers aus dem Schattenstapelspeicher (1445) und Ausführen, beginnend mit dem ersten Anweisungszeiger nur dann, wenn der erste Anweisungszeiger und der zweite Anweisungszeiger übereinstimmen.

## Revendications

1. Processeur, comprenant :
un décodeur (1446) destiné à décoder une instruction en une instruction décodée, l'instruction comprenant un premier champ qui indique un pointeur d'instruction pour un gestionnaire d'événement de niveau utilisateur ; et
une unité d'exécution (1454) destinée à exécuter l'instruction décodée afin, après une permutation d'un pointeur d'instruction, qui indique où un événement s'est produit, d'un registre de pointeur d'instruction actuel (1416) à un registre de pointeur de gestionnaire d'événement de niveau utilisateur (1414), de pousser le pointeur d'instruction, qui indique où l'événement s'est produit, sur un stockage de pile d'appel (1444), et de changer un pointeur d'instruction actuel dans le registre de pointeur d'instruction actuel (1416) en le pointeur d'instruction pour le gestionnaire d'événement de niveau utilisateur.

2. Processeur de la revendication 1, dans lequel l'instruction comprend en outre un second champ qui indique un nombre de bits selon lequel il faut changer un pointeur de pile pour le stockage de pile d'appel (1444), et l'unité d'exécution (1454) est destinée à exécuter l'instruction décodée afin également de changer le pointeur de pile selon le nombre de bits.

3. Processeur de l'une quelconque des revendications 1 et 2, dans lequel l'unité d'exécution (1454) est destinée à exécuter l'instruction décodée afin également de changer un pointeur de pile pour le stockage de pile d'appel (1444) pour protéger une zone rouge de pile pour qu'elle ne soit pas écrasée par le pointeur d'instruction qui indique où l'événement s'est produit.

4. Processeur de l'une quelconque des revendications 1 à 3, dans lequel l'unité d'exécution (1454) est destinée à exécuter l'instruction décodée seulement lorsque le processeur n'est pas dans un mode de notification d'événement.

5. Processeur de la revendication 4, dans lequel le mode de notification d'événement est réglé dans un registre de statut de notification d'événement.

6. Processeur de l'une quelconque des revendications 1 à 5, dans lequel l'unité d'exécution (1454) est destinée à exécuter l'instruction décodée afin également, après la permutation du pointeur d'instruction, qui indique où l'événement s'est produit, du registre de pointeur d'instruction actuel (1416) au registre de pointeur de gestionnaire d'événement de niveau utilisateur (1414), de pousser le pointeur d'instruction, qui indique où l'événement s'est produit, sur un stockage de pile fantôme (1445).

7. Processeur de la revendication 6, dans lequel le stockage de pile fantôme (1445) n'est pas inscriptible au niveau utilisateur.

8. Processeur de la revendication 6, dans lequel, à la suite de l'achèvement de l'exécution du gestionnaire d'événement de niveau utilisateur, le processeur est destiné à extraire un premier pointeur d'instruction du stockage de pile d'appel (1444) et un second pointeur d'instruction du stockage de pile fantôme (1445), et exécuter le commencement à partir du premier pointeur d'instruction seulement lorsque le premier pointeur d'instruction et le second pointeur d'instruction correspondent.

9. Procédé, comprenant :
le décodage d'une instruction en une instruction décodée avec un décodeur (1446) d'un processeur, l'instruction comprenant un premier champ qui indique un pointeur d'instruction pour un gestionnaire d'événement de niveau utilisateur ; et
l'exécution de l'instruction décodée avec une unité d'exécution (1454) du processeur afin, après une permutation d'un pointeur d'instruction, qui indique où un événement s'est produit, d'un registre de pointeur d'instruction actuel (1416) à un registre de pointeur de gestionnaire d'événement de niveau utilisateur (1414), de pousser le pointeur d'instruction, qui indique où l'événement s'est produit, sur un stockage de pile d'appel (1444), et de changer un pointeur d'instruction actuel dans le registre de pointeur d'instruction actuel (1416) en le pointeur d'instruction pour le gestionnaire d'événement de niveau utilisateur.

10. Procédé de la revendication 9, dans lequel l'instruction comprend en outre un second champ qui indique un nombre de bits selon lequel il faut changer un pointeur de pile pour le stockage de pile d'appel (1444), et l'exécution de l'instruction décodée avec l'unité d'exécution (1454) est afin également de changer le pointeur de pile selon le nombre de bits.

11. Procédé de l'une quelconque des revendications 9 et 10, dans lequel l'exécution de l'instruction décodée avec l'unité d'exécution (1454) est afin également de changer un pointeur de pile pour le stockage de pile d'appel (1444) pour protéger une zone rouge de pile pour qu'elle ne soit pas écrasée par le pointeur d'instruction qui indique où l'événement s'est produit.

12. Procédé de l'une quelconque des revendications 9 à 11, dans lequel l'exécution de l'instruction décodée avec l'unité d'exécution (1454) est seulement lorsque le processeur n'est pas dans un mode de notification d'événement.

13. Procédé de la revendication 12, comprenant en outre le réglage du mode de notification d'événement dans un registre de statut de notification d'événement du processeur.

14. Procédé de l'une quelconque des revendications 9 à 13, dans lequel l'exécution de l'instruction décodée avec l'unité d'exécution (1454) est afin également, après la permutation du pointeur d'instruction, qui indique où l'événement s'est produit, depuis le registre de pointeur d'instruction actuel (1416) en le registre de pointeur de gestionnaire d'événement de niveau utilisateur (1414), de pousser le pointeur d'instruction, qui indique où l'événement s'est produit, sur un stockage de pile fantôme (1445).

15. Procédé de la revendication 14, comprenant en outre, à la suite de l'achèvement de l'exécution du gestionnaire d'événement de niveau utilisateur, l'extraction, par le processeur, d'un premier pointeur d'instruction du stockage de pile d'appel (1444) et d'un second pointeur d'instruction du stockage de pile fantôme (1445), et l'exécution du commencement à partir du premier pointeur d'instruction seulement lorsque le premier pointeur d'instruction et le second pointeur d'instruction correspondent.
